# EUROPEAN PATENT SPECIFICATION

(11) **EP 0 340 939 B1**
(45) Date of publication and mention of the grant of the patent: **24.02.1993**
(21) Application number: 89303852.1
(22) Date of filing: 19.04.1989
(51) Int. Cl.: B23K 9/04

(54) **Cooling workpieces being manufactured by shape melting**
Kühlung von Werkstücken, die durch formgebende Auftragsschweissung hergestellt werden
Réfrigération de pièces à usiner qui sont fabriquées par soudure à rechargement façonnante

(30) Priority: 06.05.1988 US 190791
(43) Date of publication of application: 08.11.1989
(73) Proprietor: THE BABCOCK & WILCOX COMPANY, New York, NY 10017 (US)
(72) Inventor: Doyle, Thomas Edward, Louisville Ohio 44641 (US); Ryan, Patrick Marcel, Alliance Ohio 44601 (US)
(74) Representative: Cotter, Ivan John

(56) References cited:
- US-A- 4 371 149
- US-A- 4 612 788
- WELDING JOURNAL, September 1983 K.KUSSMAUL, F.W.SCHOCH AND H.LUCKOW "High Quality Large Components 'Shape Welded' by a SAW Process" pages 17-24

## Description

This invention relates to the cooling workpieces being manufactured by shape melting.

The term "shape melting" is used herein to refer to a welding process whereby structural components are manufactured entirely from weld material deposited layer-upon-layer onto a surface or an initial preform until the desired geometry is achieved. This process offers the advantage of delivering a near net shape component that can be produced quickly and economically using either ferrous or non-ferrous materials.

A significant amount of heat is generated during the shape melting process. The source of this heat is a welding arc which is used to melt and deposit material. The heat input for shape melting might range from 3.94 kilojoules per cm (10 kilojoules per inch) to as high as 157.5 kilojoules per cm (400 kilojoules per inch) for some high deposition rate processes. Even at the low end of the heat input range, if no means of extracting heat is provided the heat input of the shape melting process will cause the average temperature of the workpiece continuously to rise. It is necessary to maintain a maximum average workpiece temperature in order to control the properties of the final product. The average temperature also impacts upon the amount of distortion in the product, the bead shape, the degree of oxidation, and, perhaps, the weldability of the deposited material. For these reasons it is desirable to maintain some maximum average "interpass" temperature.

Similar considerations (mechanical properties, weldability, distortion, etc.) also dictate that maintaining a maximum interpass temperature and an optimum cooling rate is prudent. So, to successfully manufacture a shaped melted component, a high degree of temperature control is necessary.

Various investigators have developed methods and apparatus related to the shape melting process, with particular emphasis on the cooling process. US Patent No. US-A-3 985 995 (Brandi (deceased) et al) discloses a cooling process using sprays of water or jets of air for pre-cooling and post-cooling around the weld metal deposition so as locally to cool the workpiece. Likewise, US-A-3 948 428 teaches employing a device using water and gas wherein the cooling water is brought into contact with a hot weld and wherein the generated steam and non-evaporated water are immediately removed from the weld. US-A-4 517 434 teaches the use of cooling with carbon dioxide by admixing it in the solid state with a welding powder.

German Patent Application Publication No. DE-A-2 942 868 discloses a device for locally cooling a welding zone in front of and/or behind the particular weld point by means of liquid and/or gaseous media. The device consists of at least one unit with a nozzle directed towards the workpiece for spreading a cooling fluid, and placed in a directing funnel with a hood surrounding the directing funnel connected to a vacuum device. Vapours created by the cooling process are immediately aspirated. Several units can be used to increase the cooling performance, and have a means for operating in excess of a 90° angle. UK Patent Application Publication No. GB-A-2 061 156 modifies this cooling approach with the addition of an exhaust duct to remove indirectly cooling vapour and radiant heat.

The time at which the coolant is removed is another approach, this approach being taken in GB-A-2 160 809 by removing the water-air mixture before the formation of steam.

Other approaches to cooling the workpiece involve techniques for rebuilding tractor-roller assemblies such as disclosed in US-A-4 230 928, US-A-3 514 568, US-A-3 596 041, US-A-3 895 209 and US-A-4 233 487.

Still other attempts at cooling workpieces in the form of shape melted components include: employment of a water cooled dam (US-A-3 696 228); an outer jacket forming a coolant chamber (US-A-2 912 562); US-A-3 071 678 and US-A-3 179 783; a water cooled welding torch, or some modification thereto such as in US-A-4 140 892; and cooling of the workpiece holder as in US-A-3 777 106 and US-A-3 953 704.

Many of the features of the prior art are also described in a literature article on shape welding, namely "High Quality Large Components 'Shape Welded' By A SAW Process", Kussmaul, K., Schoch, F.W., and Luck- ow, H., Welding Journal, September 1983.

Evaluation of the above-mentioned references reveal many attempts to address the need for a device to cool at a desired rate or to within a given temperature range, However, in every instance no indication is given as to how the device is precisely and accurately controlled to achieve the desired cooling response.

There is a need for a device which has the ability to sense the temperature of the workpiece, and to adjust the total coolant flow rate through the device for optimum cooling, The prior art shows the need for an apparatus that, when the temperature of the workpiece varies upwardly at different rates during manufacture, will cool at different rates to maintain a constantly acceptable interpass temperature.

According to a first aspect of the invention there is provided apparatus for automatically cooling a workpiece being manufactured by shape melting, the apparatus comprising:
cooling means for peripherally cooling the workpiece;
pre-cooling and post-cooling temperature sensing means for peripherally sensing the temperature of the workpiece and establishing control signals indicative of the sensed temperatures;
translating means for translating the cooling means and the temperature sensing means about the workpiece; and
controlling means for controlling the cooling means in response to the control signals of the temperature sensing means;
the cooling means comprising:
at least one spray head directed at the workpiece;
a coolant supply duct connected to the or each spray head;
a gas supply duct connected to the or each spray head; and

regulating means for regulating flow through the coolant and gas supply ducts, the regulating means being responsive to the controlling means.

According to a second aspect of the invention there is provided a method of automatically cooling a workpiece being manufactured by shape melting, the method comprising the steps of:
cooling the periphery of the workpiece;
sensing the temperature of the periphery of the workpiece prior to the cooling step;
sensing the temperature of the periphery of the workpiece after the cooling step;
establishing control signals indicative of the sensed temperatures; and
controlling the rate of cooling with a controlling means responsive to said control signals;
said cooling step comprising the steps of:
spraying a coolant on to the workpiece via at least one spray head;
supplying coolant via a duct to the or each spray head;
blowing a gas on to the workpiece through the or each spray head;
supplying a gas via a duct to the or each spray head; and

regulating the flow of the coolant and the gas with a regulating means responsive to the controlling means.

A preferred embodiment of the invention described in detail hereinbelow enables solution of the aforementioned problems associated with the prior art by providing a computer controlled cooling apparatus designed to cool the workpiece at an optimum cooling rate and to maintain an optimum interpass temperature. The apparatus is provided with an automated feedback arrangement which controls the operation of a cooling head assembly that aids in achieving optimum cooling, The preferred apparatus includes means whereby a gas/liq- uid coolant mixture is pumped through at least one spray head or nozzle onto the external surface of the part of workpiece to be cooled. Cooling of the surface comes about primarily by heat conducted to, and absorbed by, the coolant mixture during vaporisation of the coolant fluid. After an increment of cooling has been accomplished, the heated and vaporised fluids are extracted from the vicinity of the surface by means of a suction device. The temperature of the workpiece is sensed before and after cooling and fed to the computer control system. Using predetermined algorithms, the control system takes the temperature input data and generates output control signals. These signals control the total rate at which coolant flows through the apparatus by individually controlling coolant flow through each of the spray heads, which comprise the cooling head assembly. As an example, if more cooling is desired, the control system activates more spray heads for flow, or it increases the flow rate through already activated heads. Both the number of spray heads and the flow rate through each spray head are variable so the cooling capabilities of the apparatus are continuously variable over the wide range of total flow rates through the apparatus. Thus, the preferred apparatus can provide accurate sensing and control of the temperature of a shape melted component; and can provide continuous and automatic control of the cooling without subjecting the weld deposit to excessive moisture or other deleterious conditions. Further, the preferred apparatus enables optimisation of the quality of the shape melted component with respect to distortion, lack of defects, and mechanical properties.

The preferred apparatus has the ability to deliver the final product with "tailored" mechanical, corrosion, and physical properties. This tailoring ability comes about because these properties are strongly tied to a number of interrelated and controllable manufacturing parameters such as: weld heat input, interpass temperature, cooling rate, bead size, bead sequence, and bead position. If, in addition to the above variables, one also permits controlled composition variation throughout the product, it is possible if appropriate control is exercised for the product to have the desired combination of strength, toughness, hardness or corrosion resistance at critical points in the product, i.e., where they are most needed. The viability of the tailored-product concept hinges on precise control of temperature.

The invention will now be further described, by way of illustrative example, with reference to the accompanying drawings, in which like references indicate like items throughout, and in which:
Figure 1 is a schematic representation of an embodiment of the invention in place on a shape melted workpiece;
Figure 2 is a cross-sectional schematic illustration of an embodiment of a cooling head of the apparatus embodying the invention in place on a shape melted workpiece; and
Figure 3 is a cross-sectional schematic illustration of an embodiment of the invention in place on an axially symmetrical shape melted workpiece.

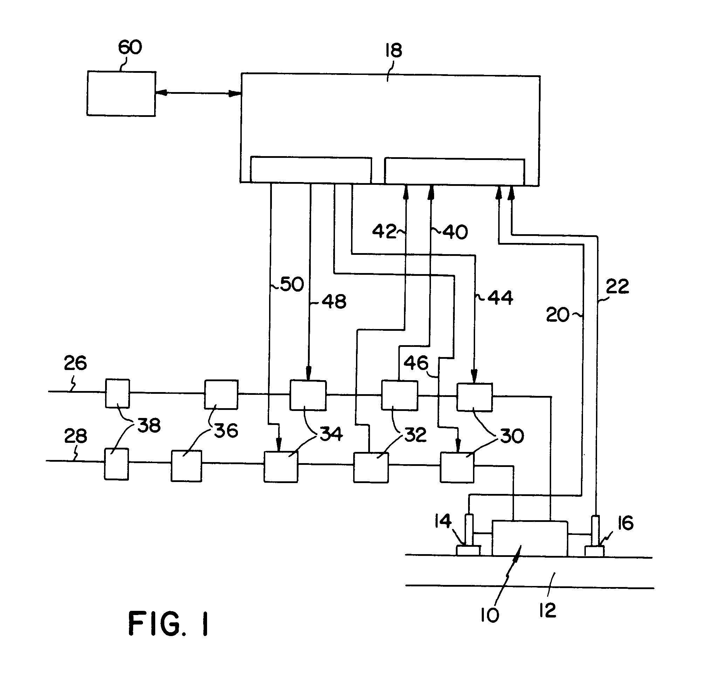

Figure 1 shows an apparatus for automatically cooling a workpiece being manufactured by shape melting. A cooling head assembly 10 is in place on top of a workpiece 12. Attached to the cooling head assembly 10 are two temperature sensors 14, 16, respectively. (Suitable temperature sensors include sliding contact thermocouples or other means for temperature sensing, such as infrared (IR) thermometers.) The sensed temperatures are fed to a computer control system 18, which may be equipped with a terminal 60, via input lines 20 and 22 which are connected to the temperature sensors 14, 16, respectively.

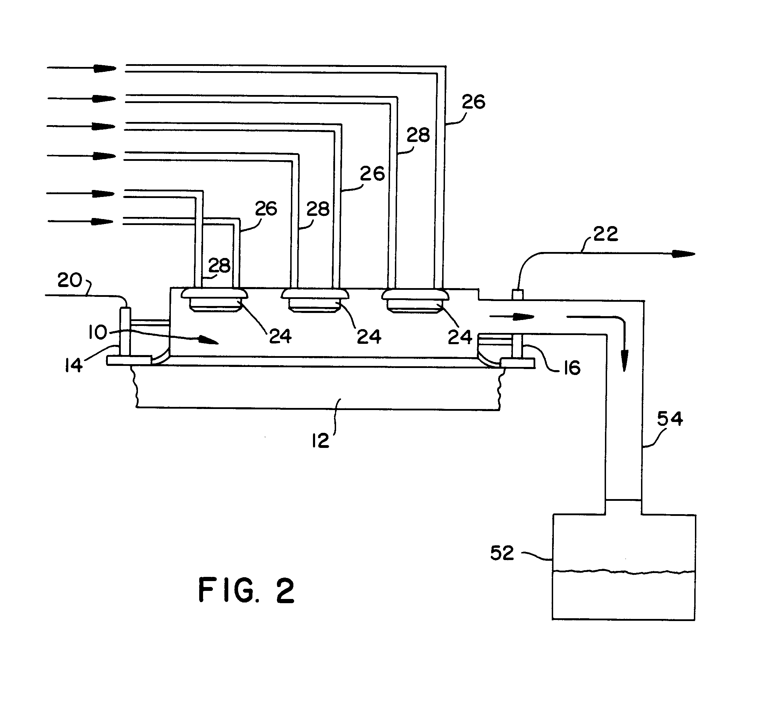

Figure 2 is a cross-sectional view of an embodiment of the cooling head assembly 10, having a plurality of spray heads or nozzles 24. The spray heads 24 are directed towards the workpiece 12. Attached to each spray head 24 is a coolant supply duct 26 and a gas supply duct 28. Referring back to Figure 1, each coolant and gas supply duct 26 and 28, respectively, is provided with a solenoid 30, a pressure transducer 32, and a servo valve 34. A main coolant supply line 26 and a main gas supply line 28 may further be provided with a filter 36 and a manual pressure regulator 38.

Pressure data from the coolant supply duct 26 and the gas supply duct 28 are transmitted from the pressure transducers 32 to the computer control system 18 by input lines 40, 42 respectively, for the coolant and gas supply ducts 26, 28. Using predetermined algorithms, the computer control system 18 uses the temperature input data and the pressure input data to generate output control signals.

The output control signals from the computer control system 18 are sent to the solenoids 30 through a control line 44 for the coolant supply duct 26 and through a control line 46 for the gas supply duct 28. The output control signals are also sent to the servo valves 34 through a control line 48 for the coolant supply duct 26 and through a control line 50 for the gas supply duct 28. These signals control the total rate at which coolant and gas flow through the device by individually controlling coolant and gas flow through each of the spray nozzles or spray heads 24 which comprise the cooling head assembly 10.

As an example, if more cooling is desired, the computer control system 18 activates more spray heads 24 for flow, or it increases the flow rate through already activated spray heads 24. Both the number of spray heads and flow rates through each spray head are variable, so the cooling capabilities of the system are continuously variable over a wide range of total flow rates through the device.

To accommodate this optimum cooling, the temperature sensors 14, 16 should be arranged so that one sensor is on one side of the cooling head assembly 10 and the other temperature sensor is on the other side of the cooling head assembly, whereby one temperature sensor can sense the temperature prior to cooling and the other temperature sensor can sense the post-cooling temperature, i.e. the temperature subsequent to cooling.

The cooling head assembly 10 can also be provided with some means for aspirating the coolant vapour resulting from the spray heads 24. Figure 2 shows how a suction device 52 can extract the heated and vaporised fluid through a duct 54. Arrows are used to indicate the flow of the vapour into the suction device 52, which may be a conventional suction device such as a wet vacuum device.

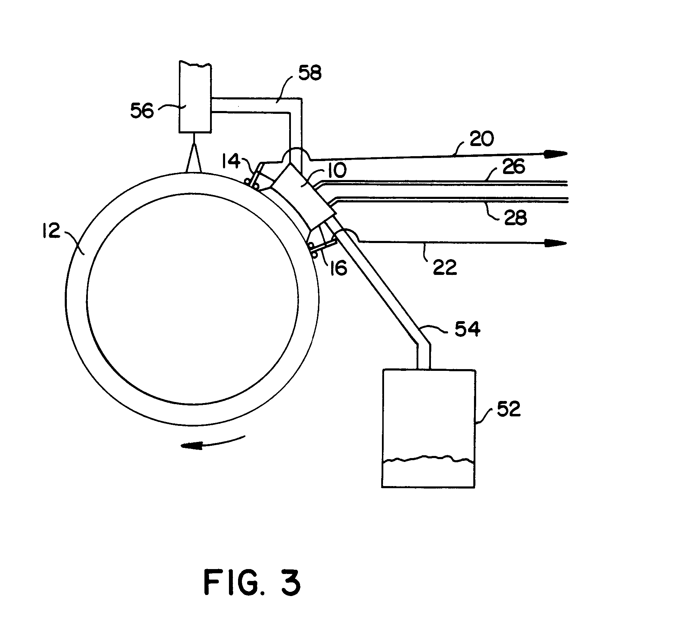

During shape melting of an axially symmetrical component or workpiece 12, the cooling head assembly 10 is mounted so it cools the workpiece 12 at a position approximately 30 to 35° in the direction of rotation from a welding head 56, as is illustrated in Figure 3. An arm 58 connects the cooling head assembly 10 with the welding head 56, thereby provided a means for translating the cooling head assembly 10 about the workpiece 12. It is readily apparent that other suitable means could include any type of remote control arm that could move the cooling head assembly 10 about the workpiece. Temperature is sensed in the vicinity of the welding head 56 by the temperature sensor 14 and at one other position by the temperature sensor 16 to generate the coolant flow and gas flow rate control signals. The cooling head assembly 10 is rigidly fixed to the welding head support system 56 so that the device translates with the head as material is deposited, and the relative positions of the welding head and cooling head assembly can be maintained constant.

The appendix appearing at the end of this description is a list of control system programming steps used to control the cooling apparatus for the shape melting program. It is written in language "C", which is used for a computer or microprocessor control system such as (for example) an IBM PC. Any programmable language which can control the cooling device in this fashion is usable.

The above-described apparatus generates the following advantages over the prior art:
1. Accurate sensing and control of the temperature of the shape melting component.
2. Control of weld cooling continuously and automatically without subjecting the weld deposit to excessive moisture or other deleterious conditions.
3. Optimisation of the quality of the shape melting component with respect to: distortion, lack of defects and mechanical properties.
4. Applies equally as well to weld cladding operations.

While a specific embodiment of the invention has been shown and described in detail to illustrate the application of the invention, the embodiment described can, of course, be subjected to modifications and improvements. As an example of one such modification, the apparatus would work equally well with two or more cooling head assemblies.

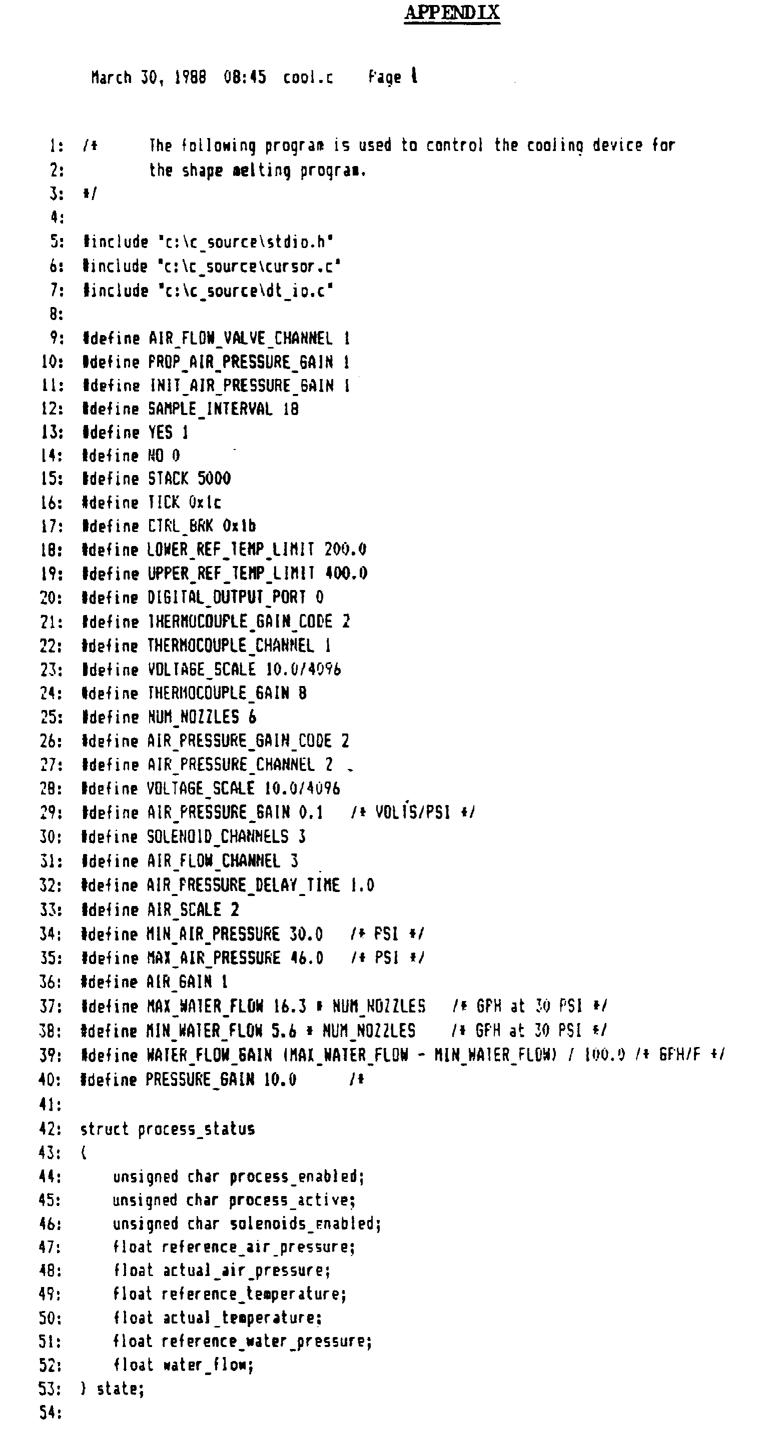

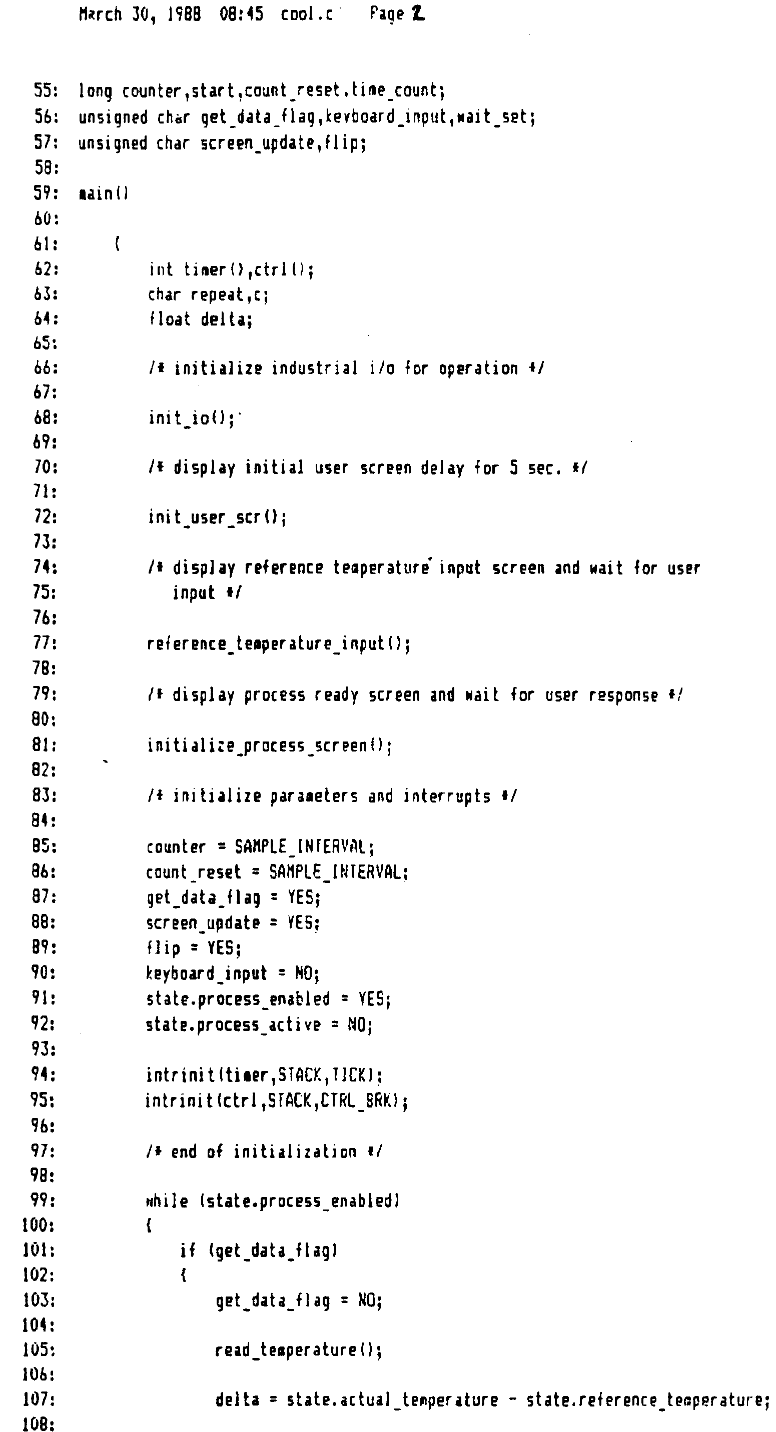

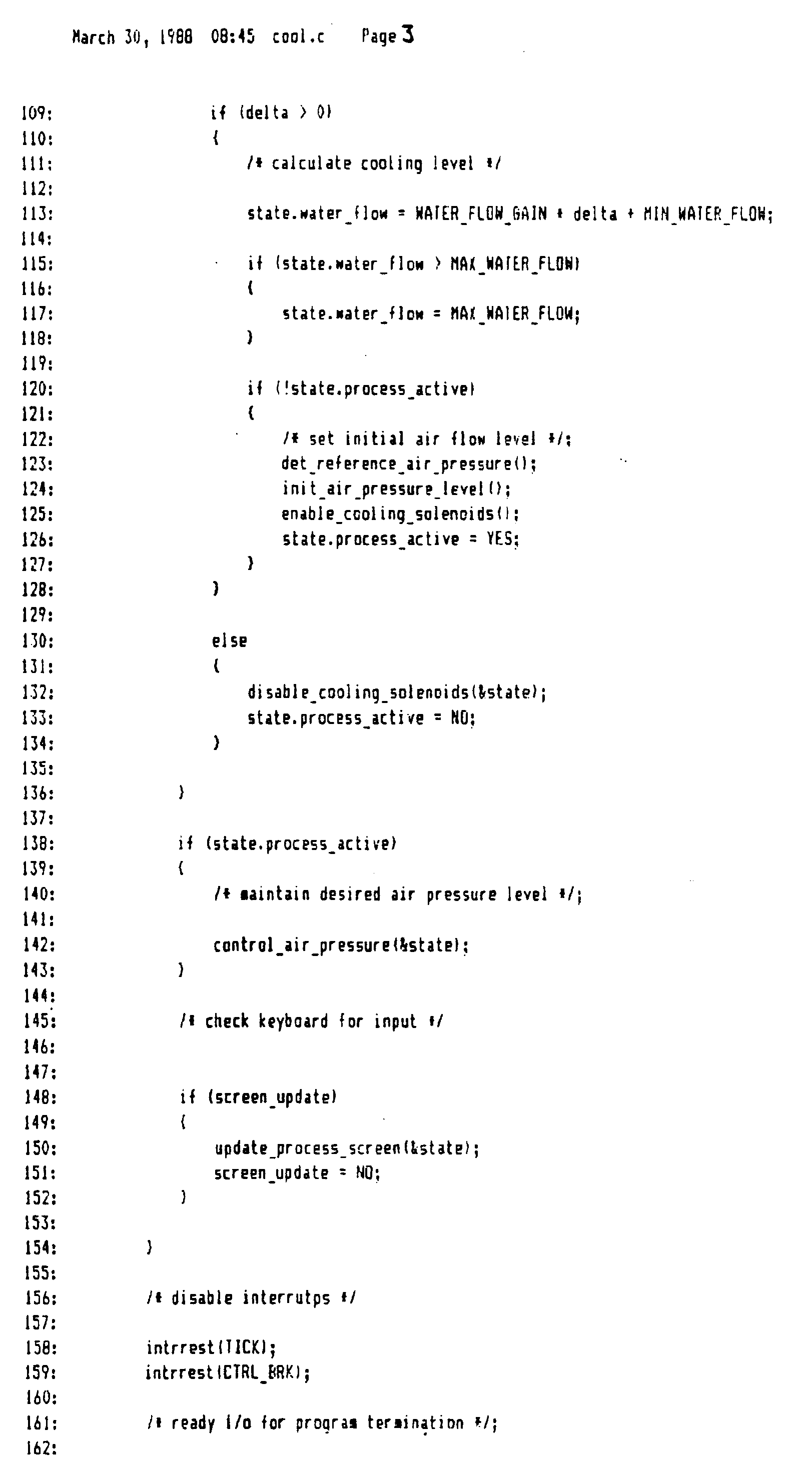

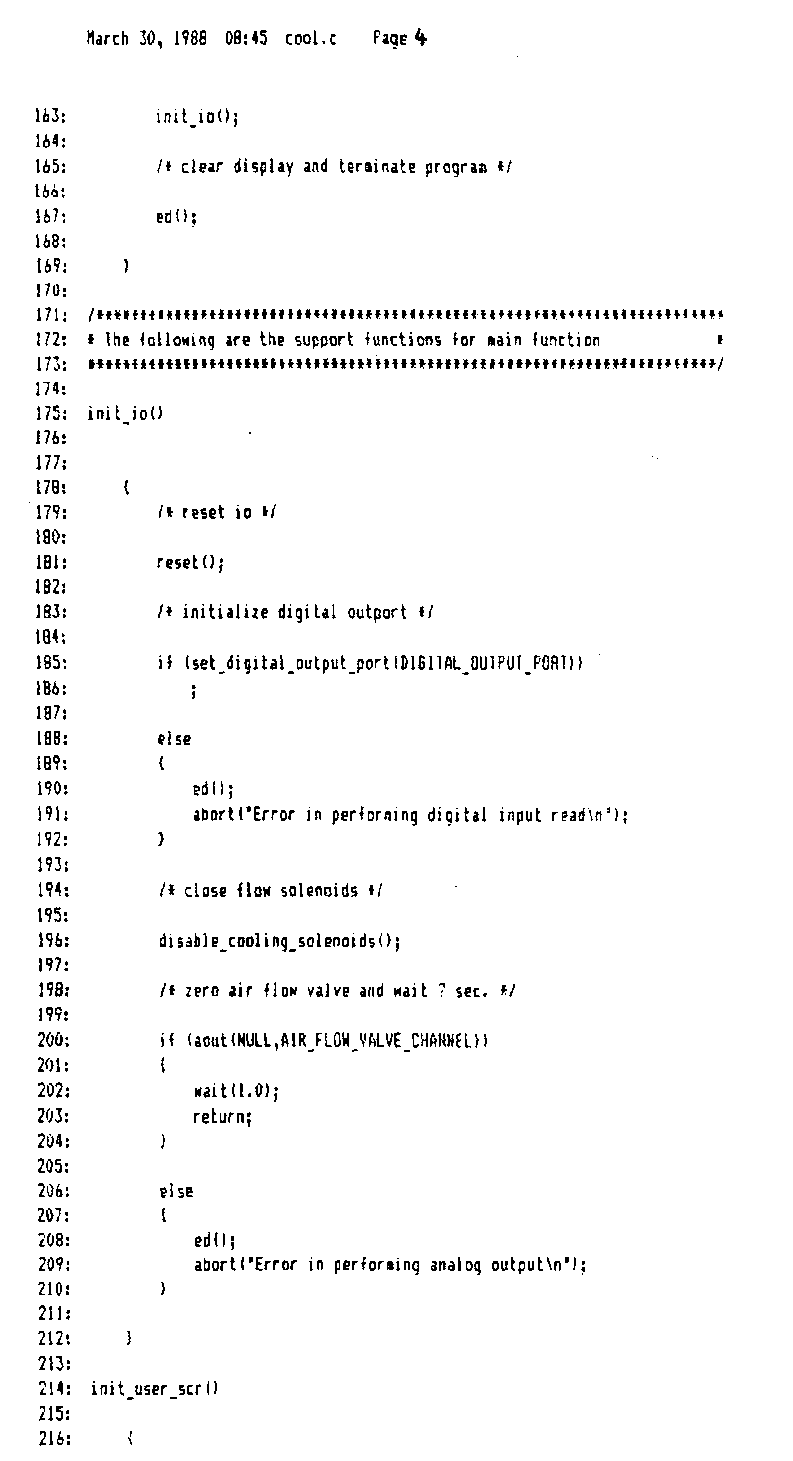

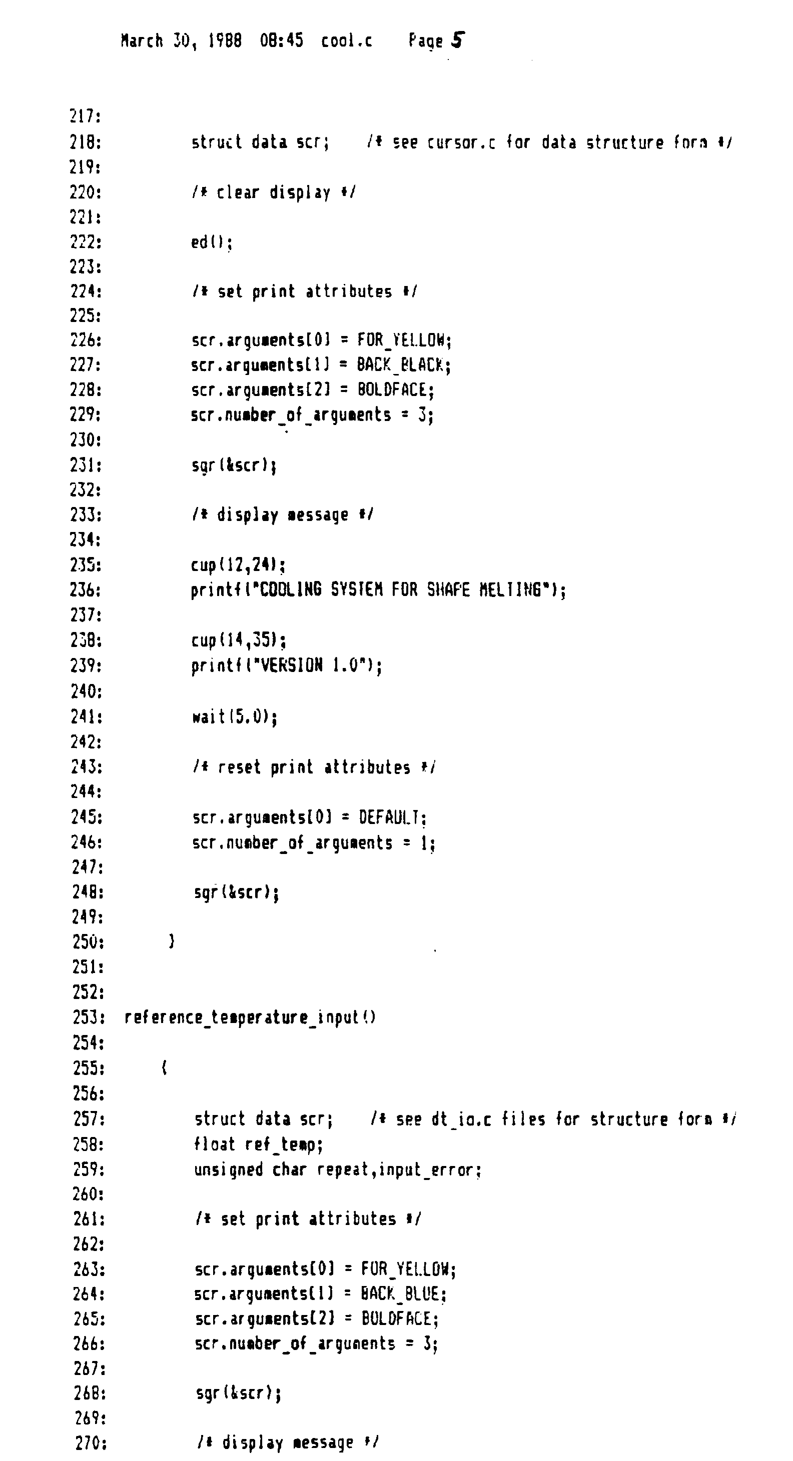

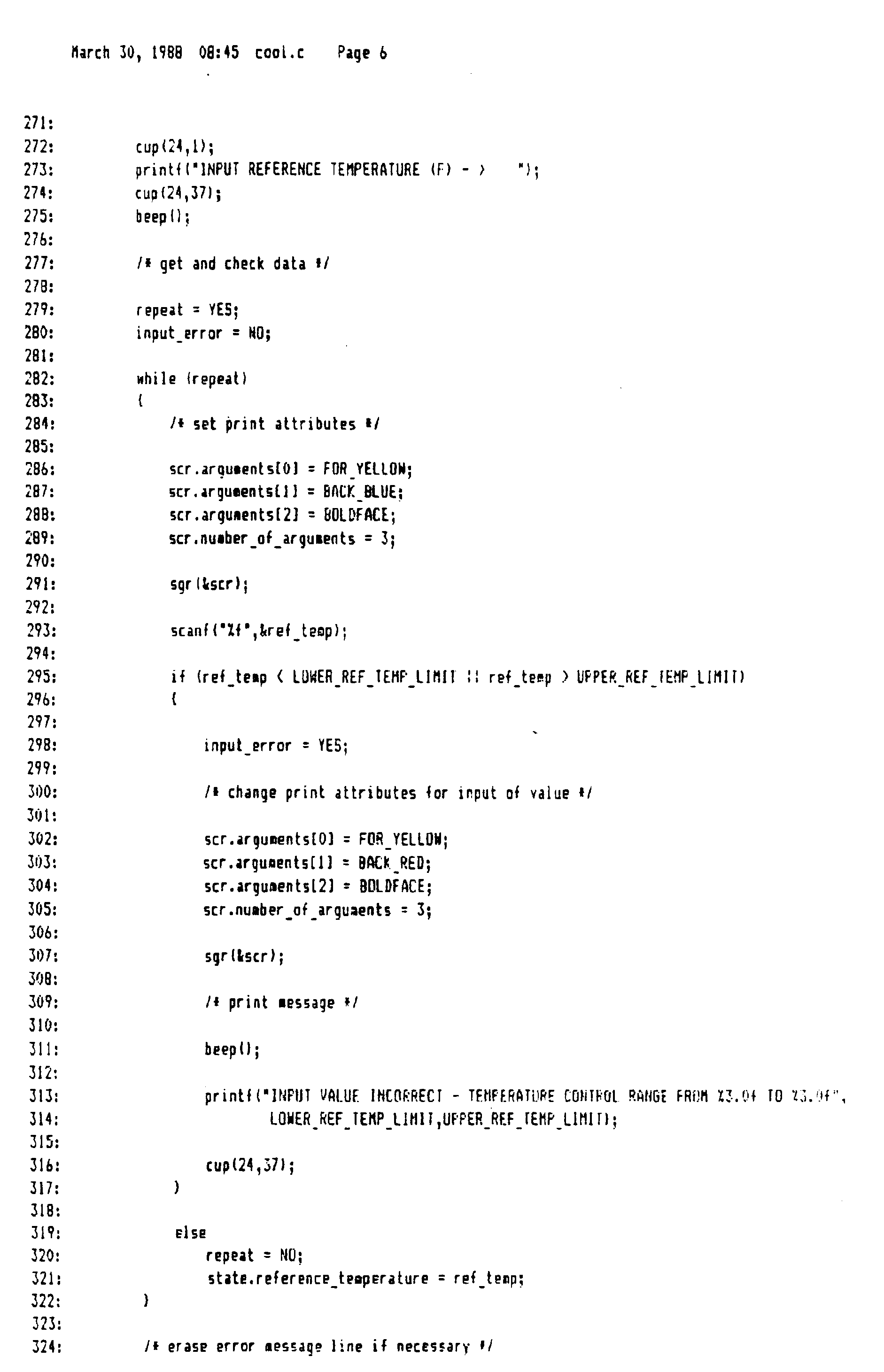

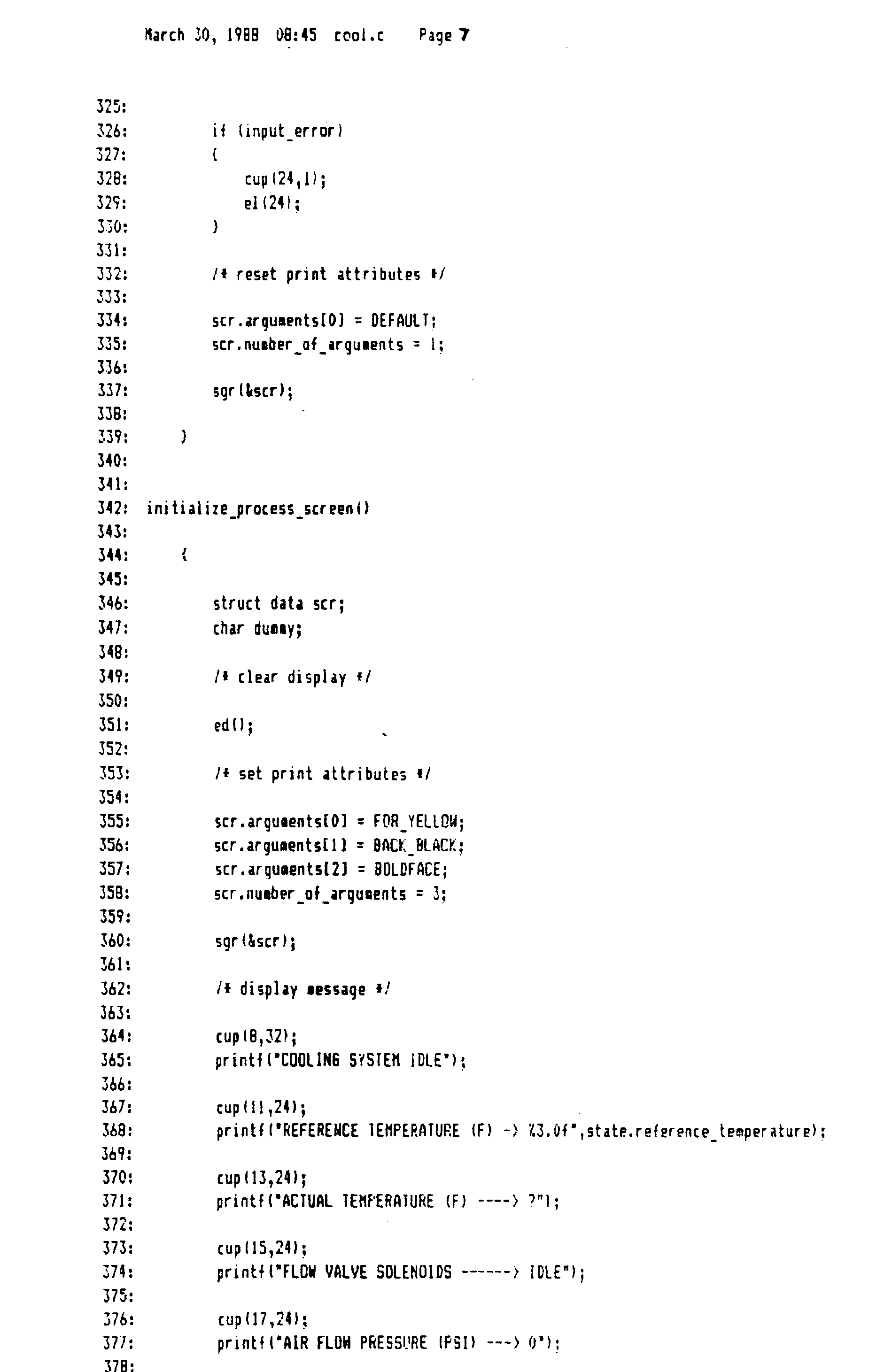

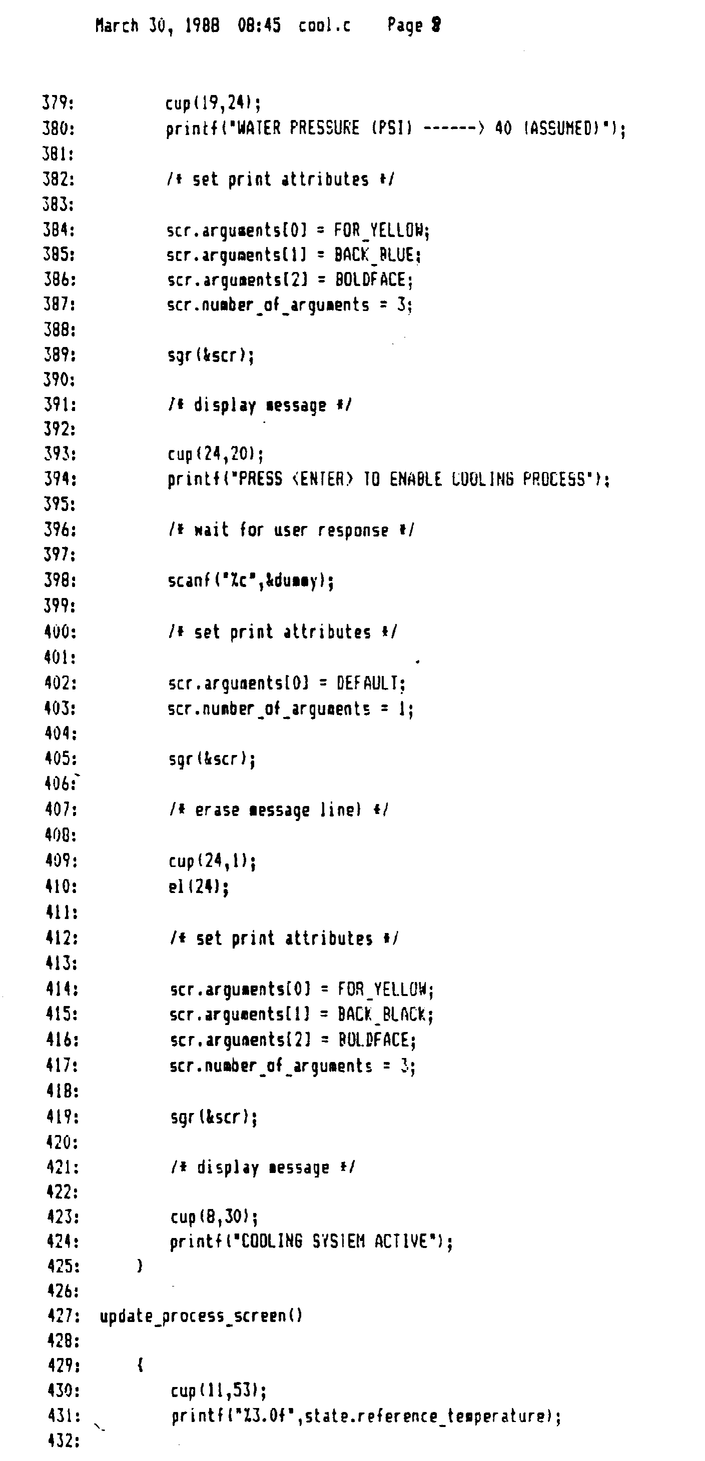

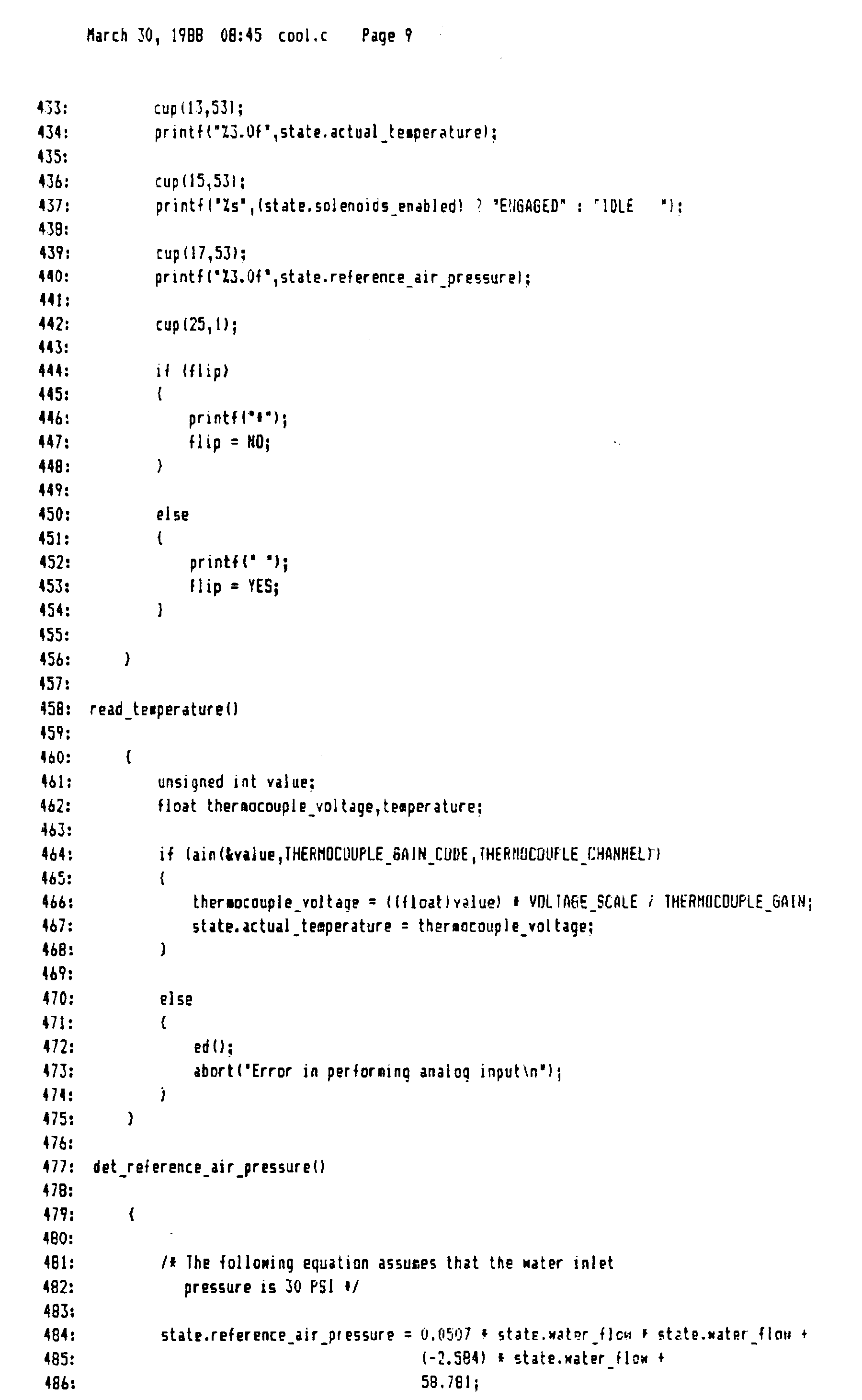

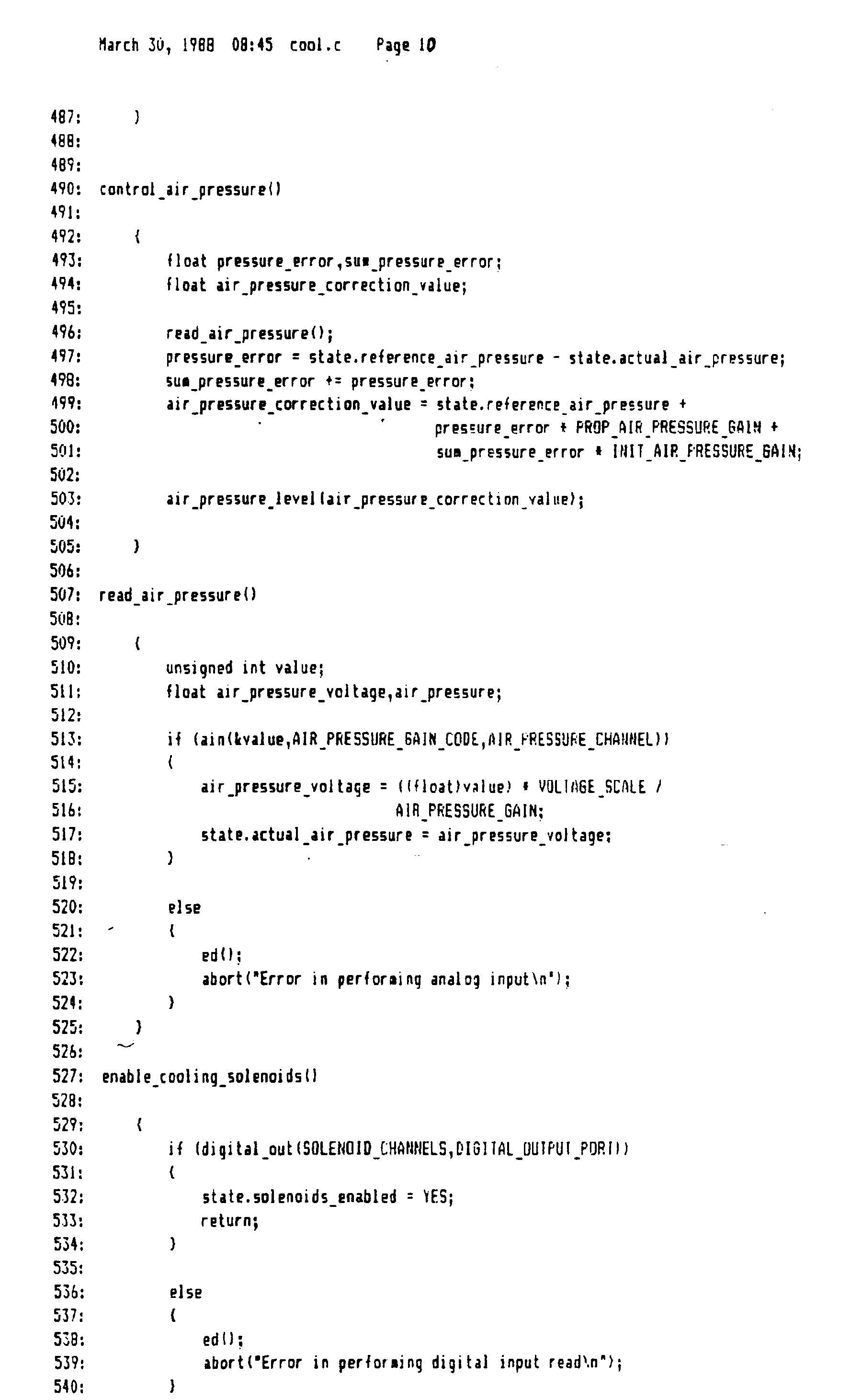

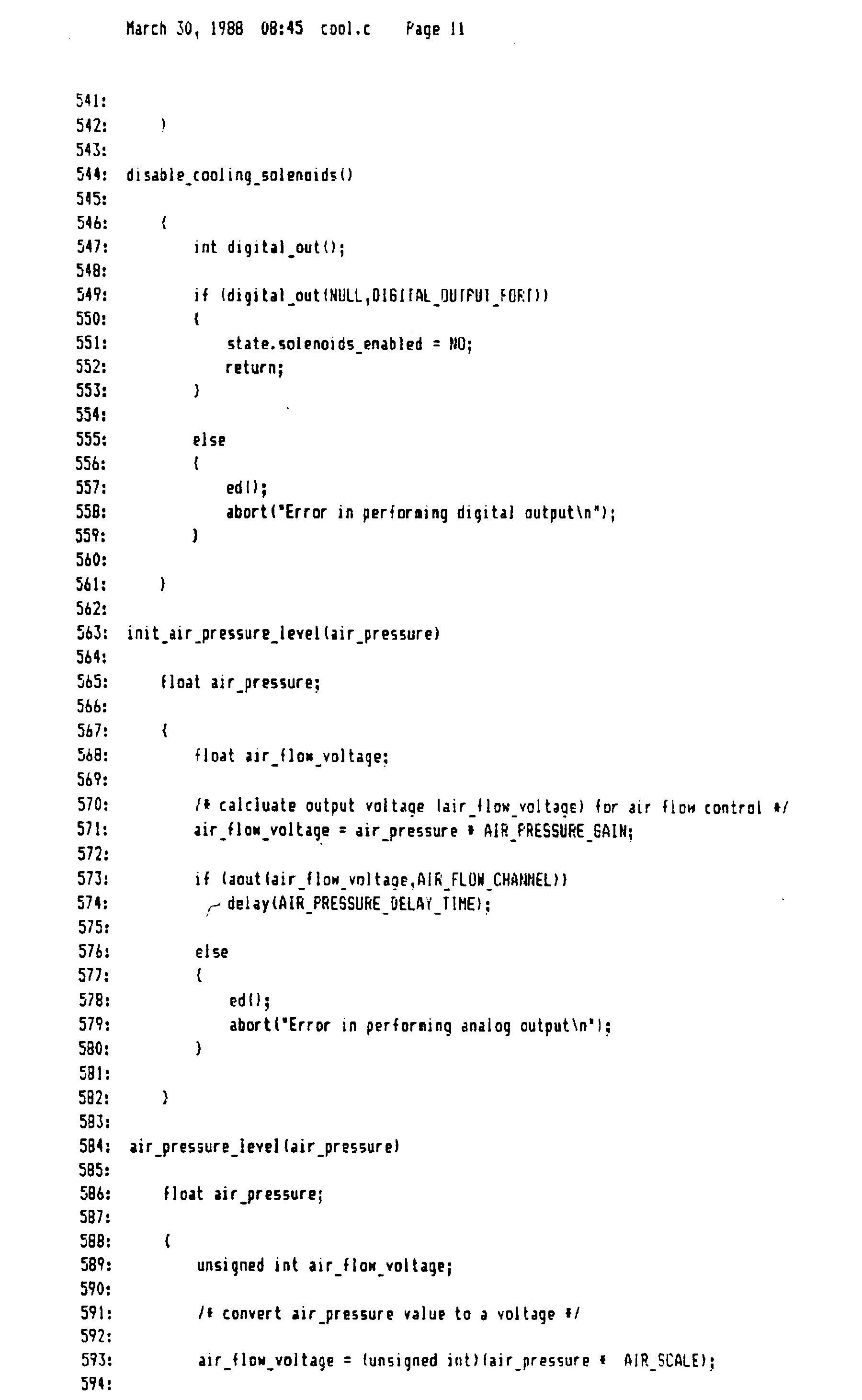

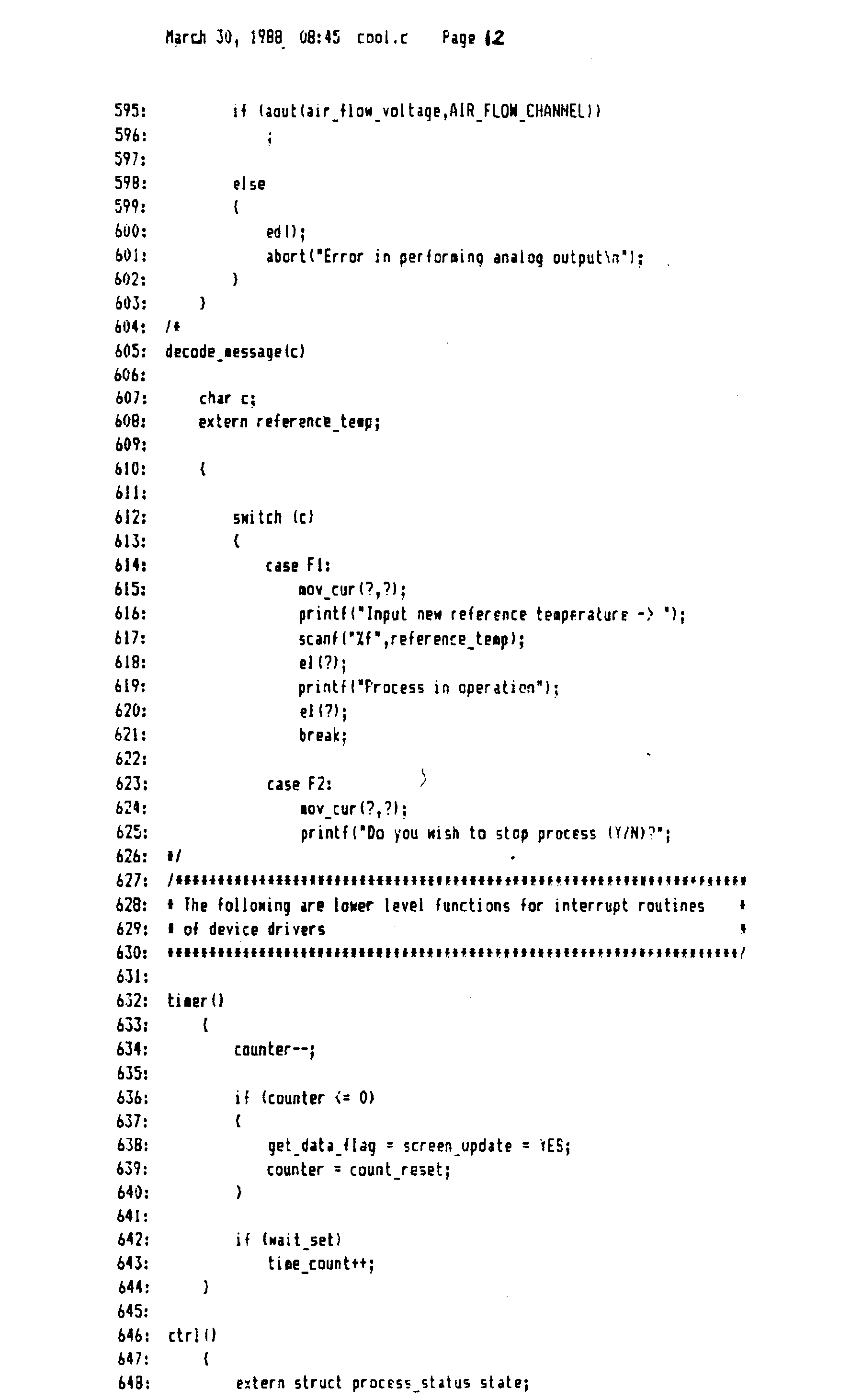

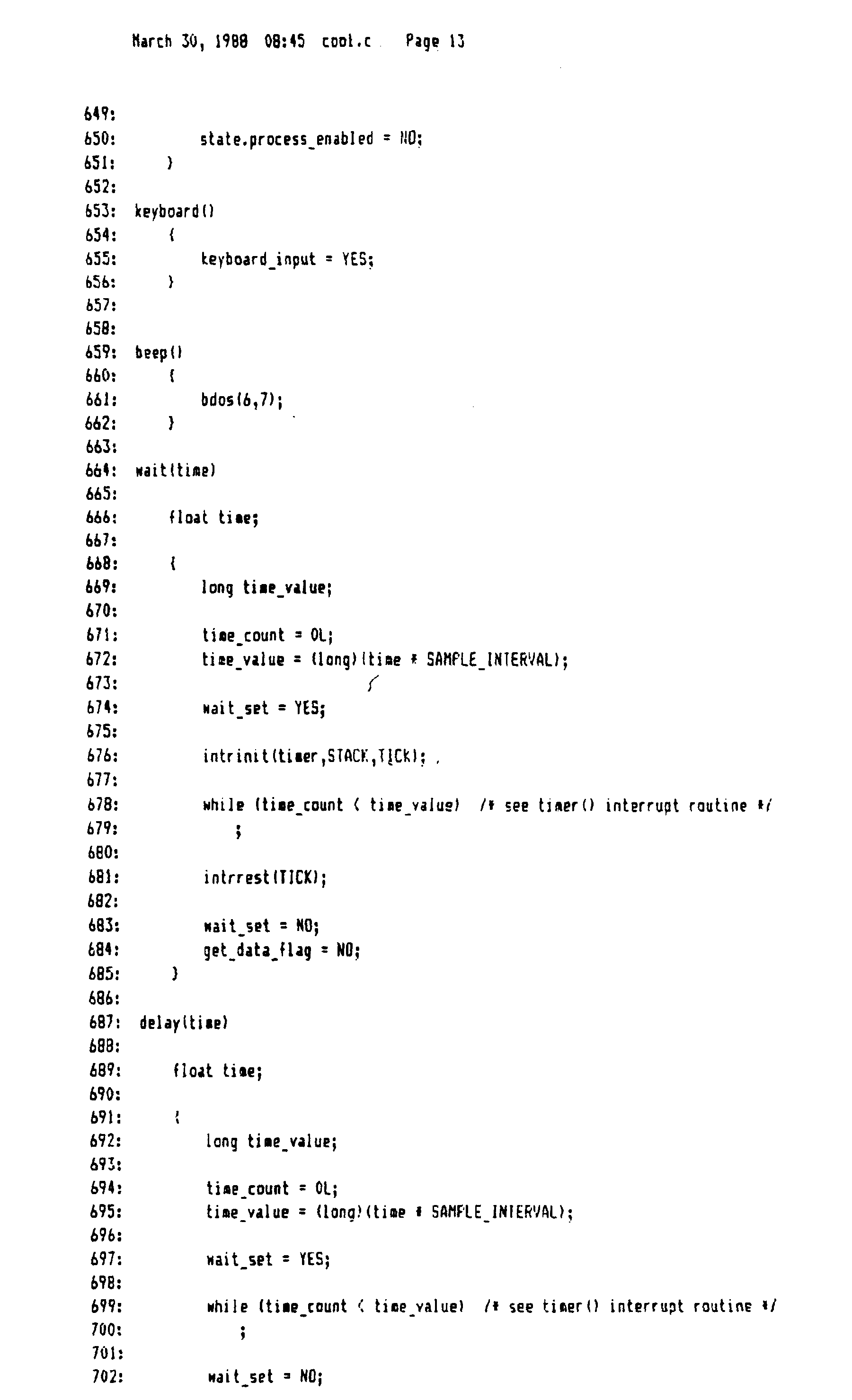

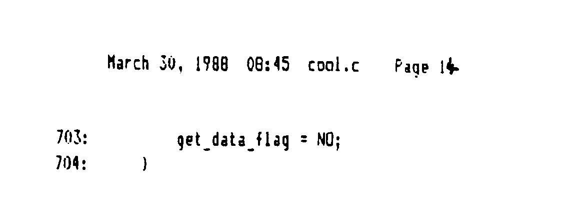

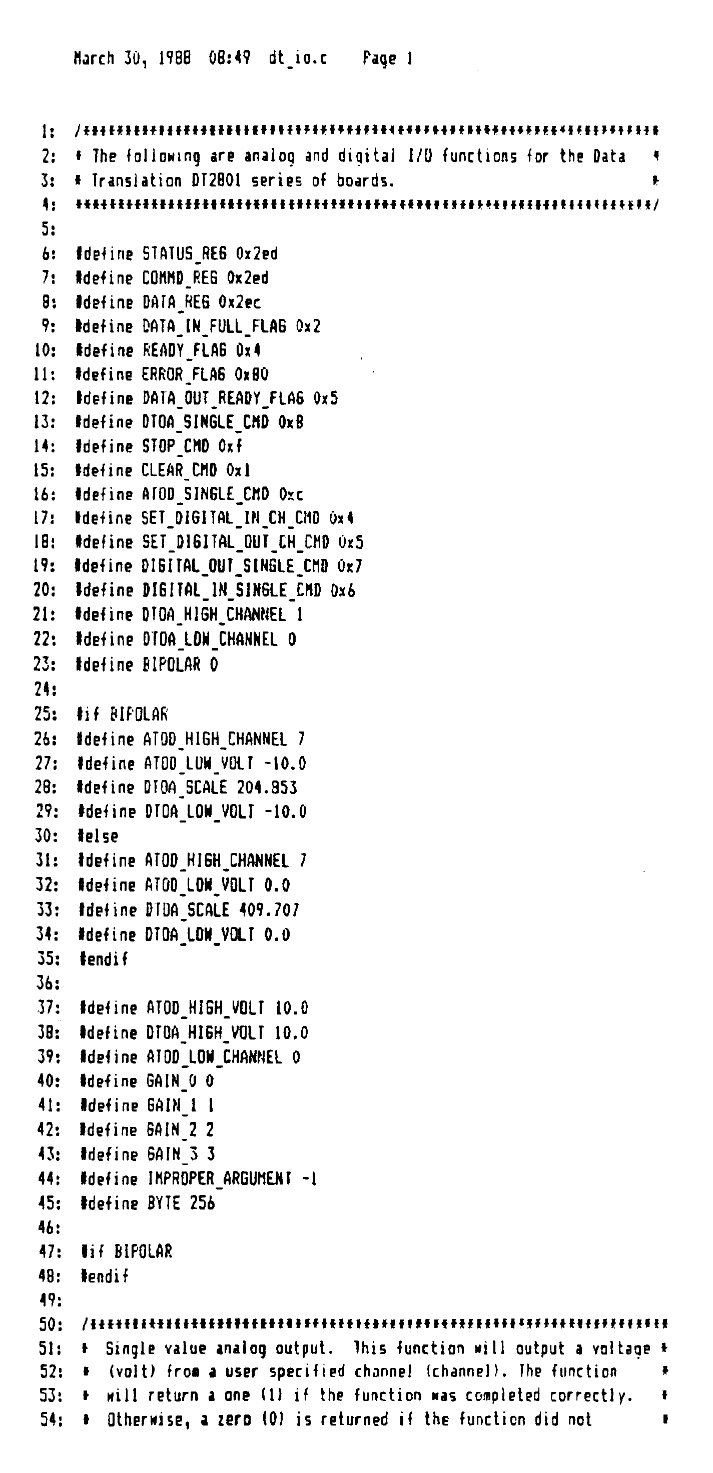

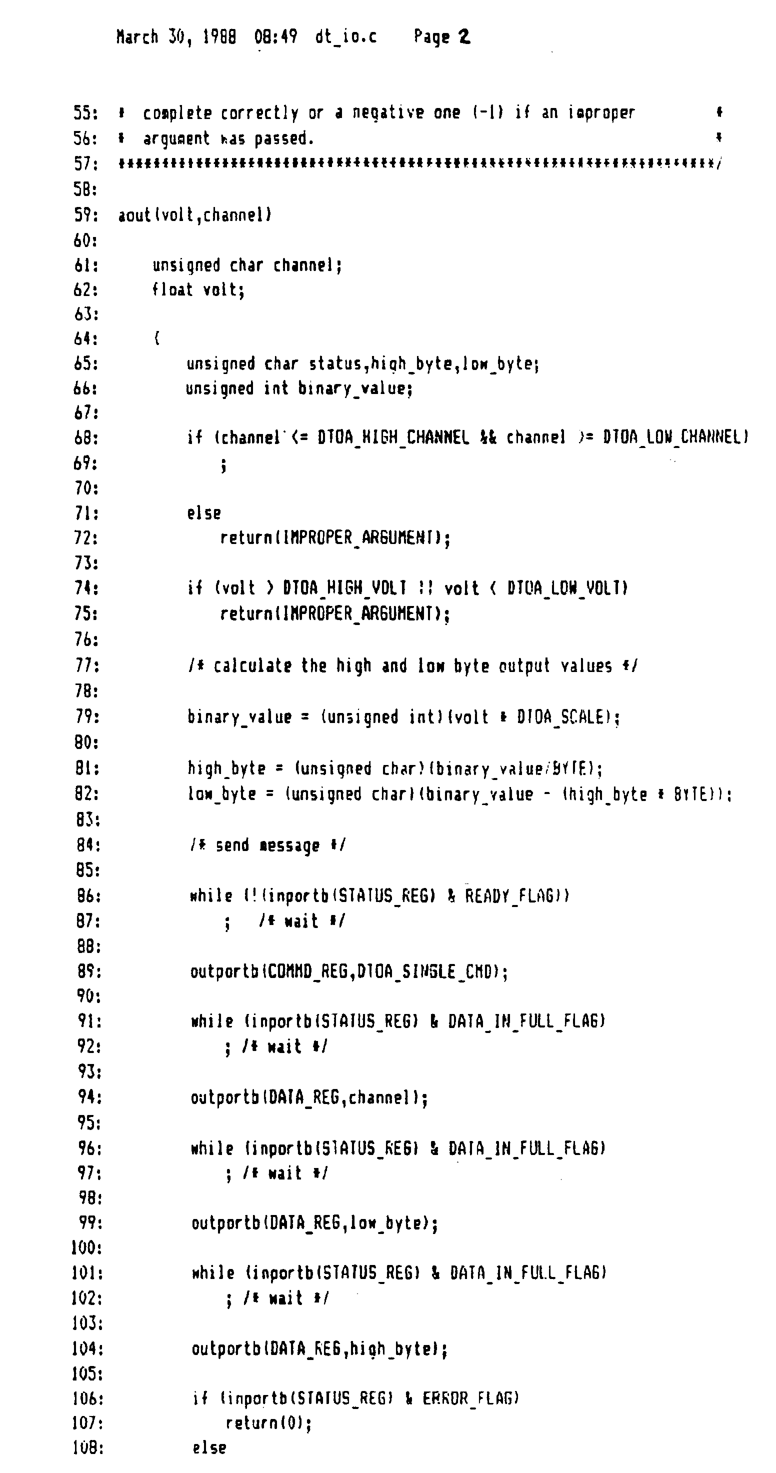

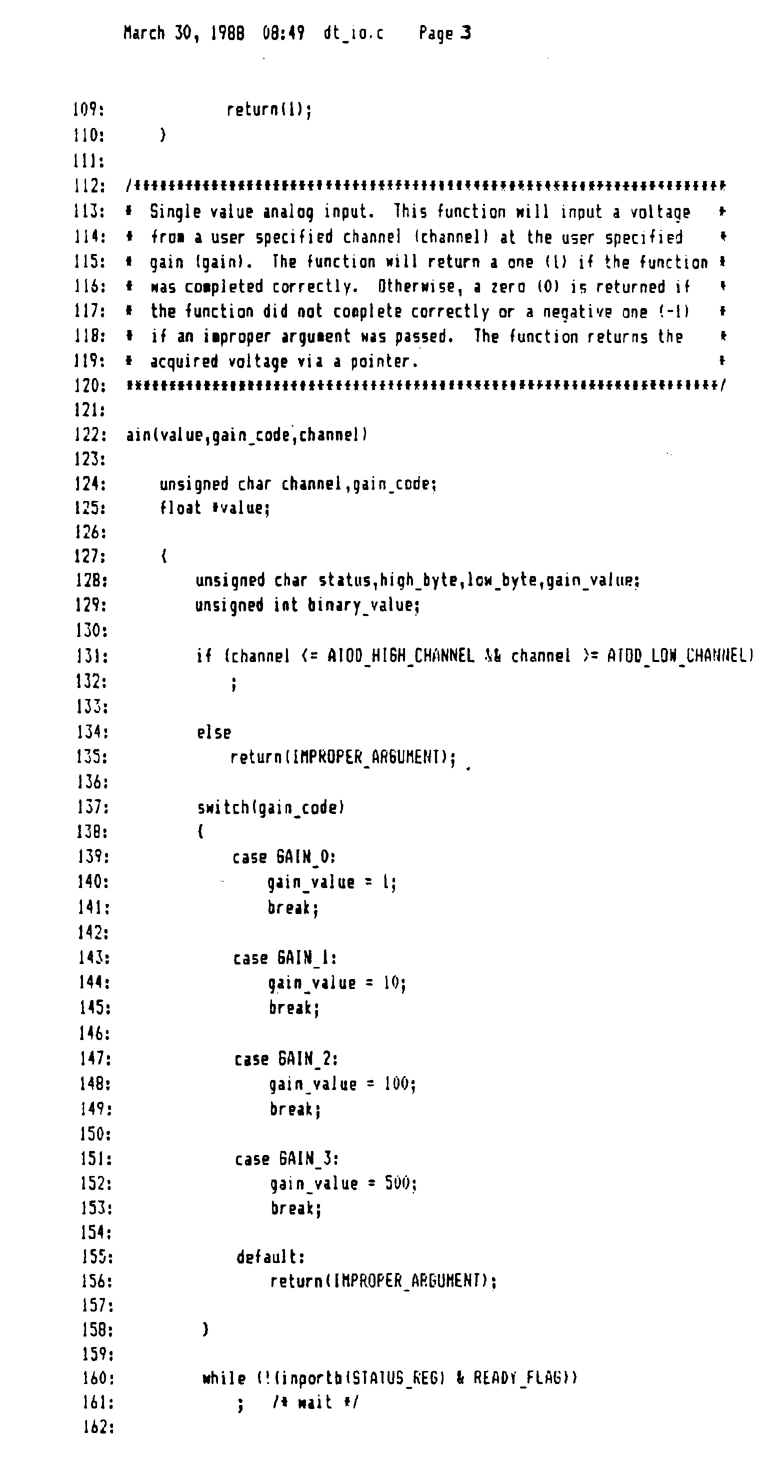

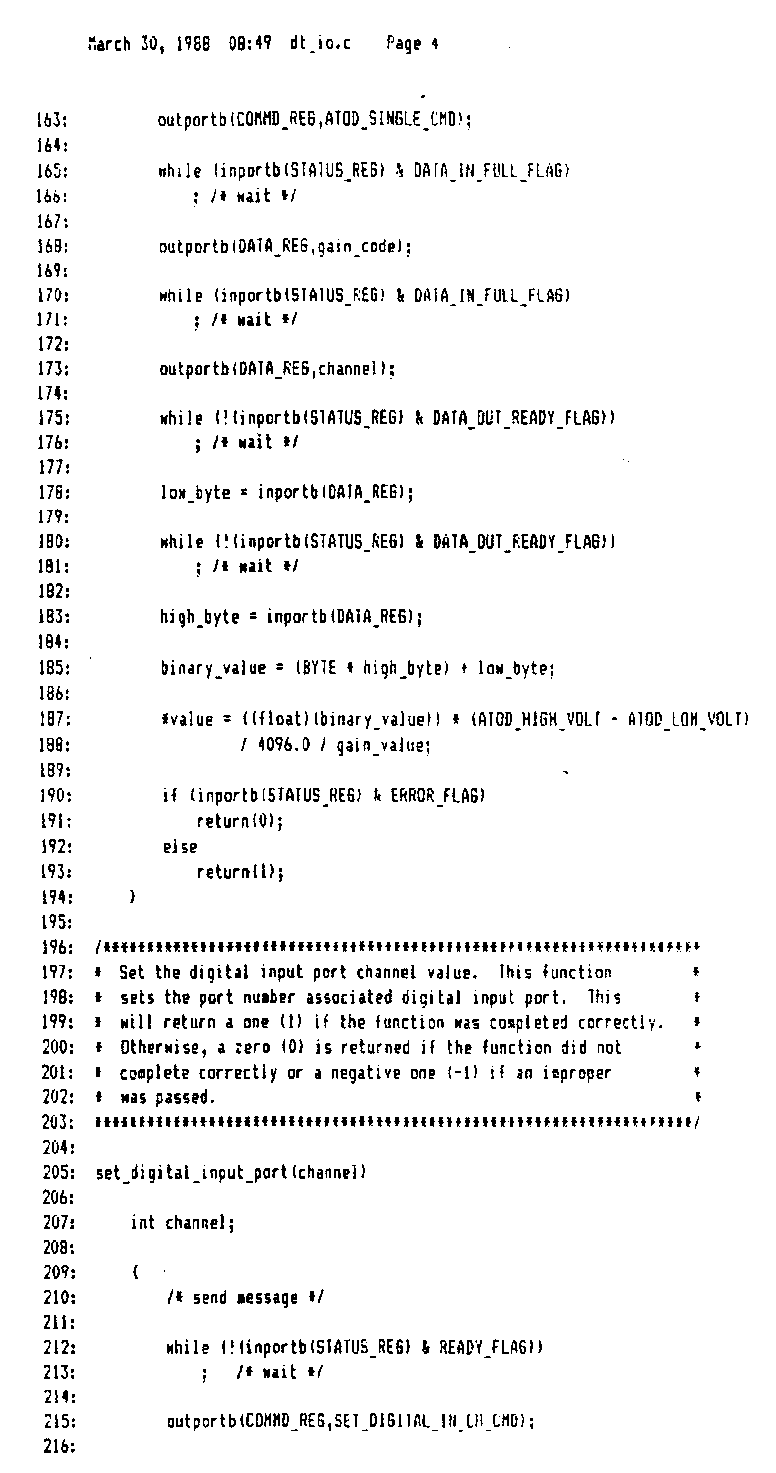

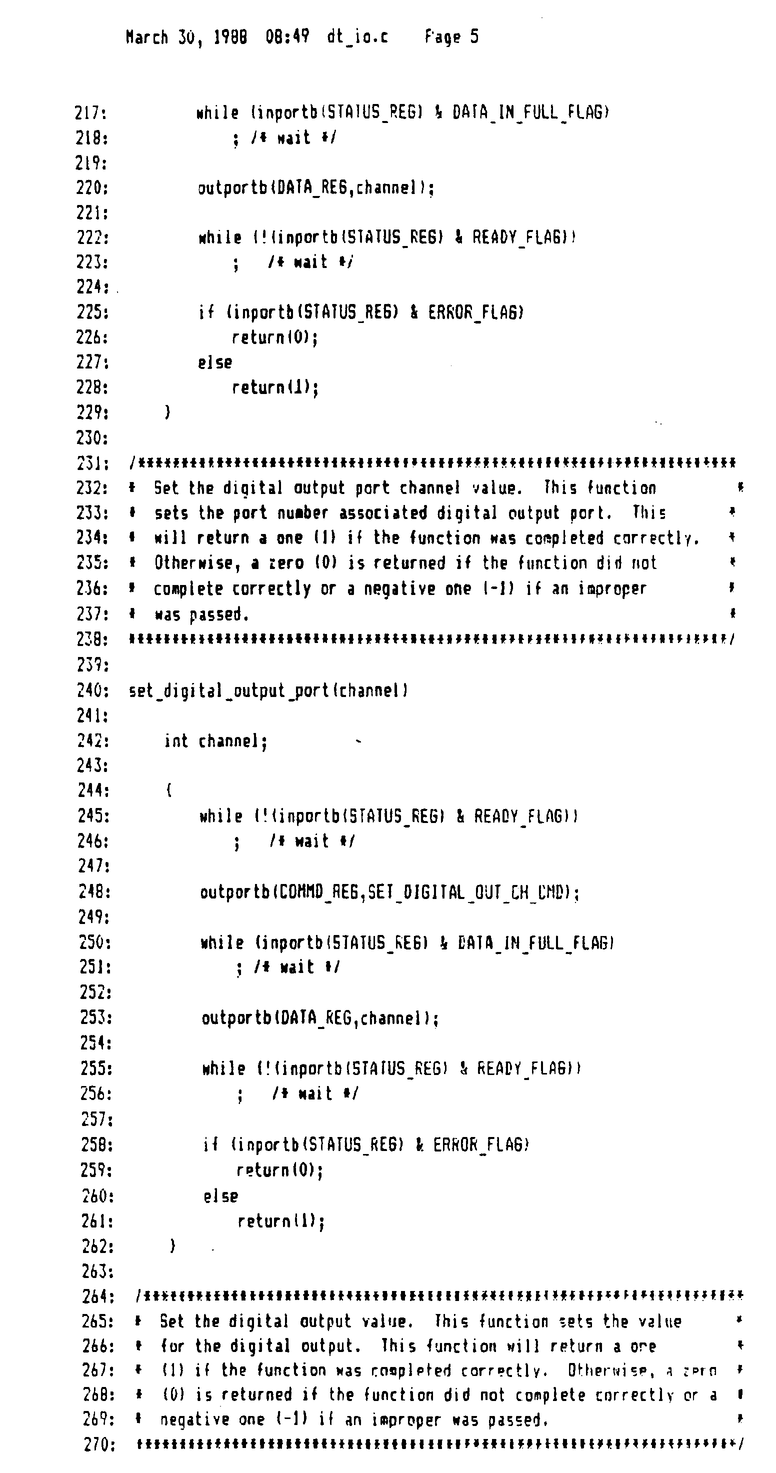

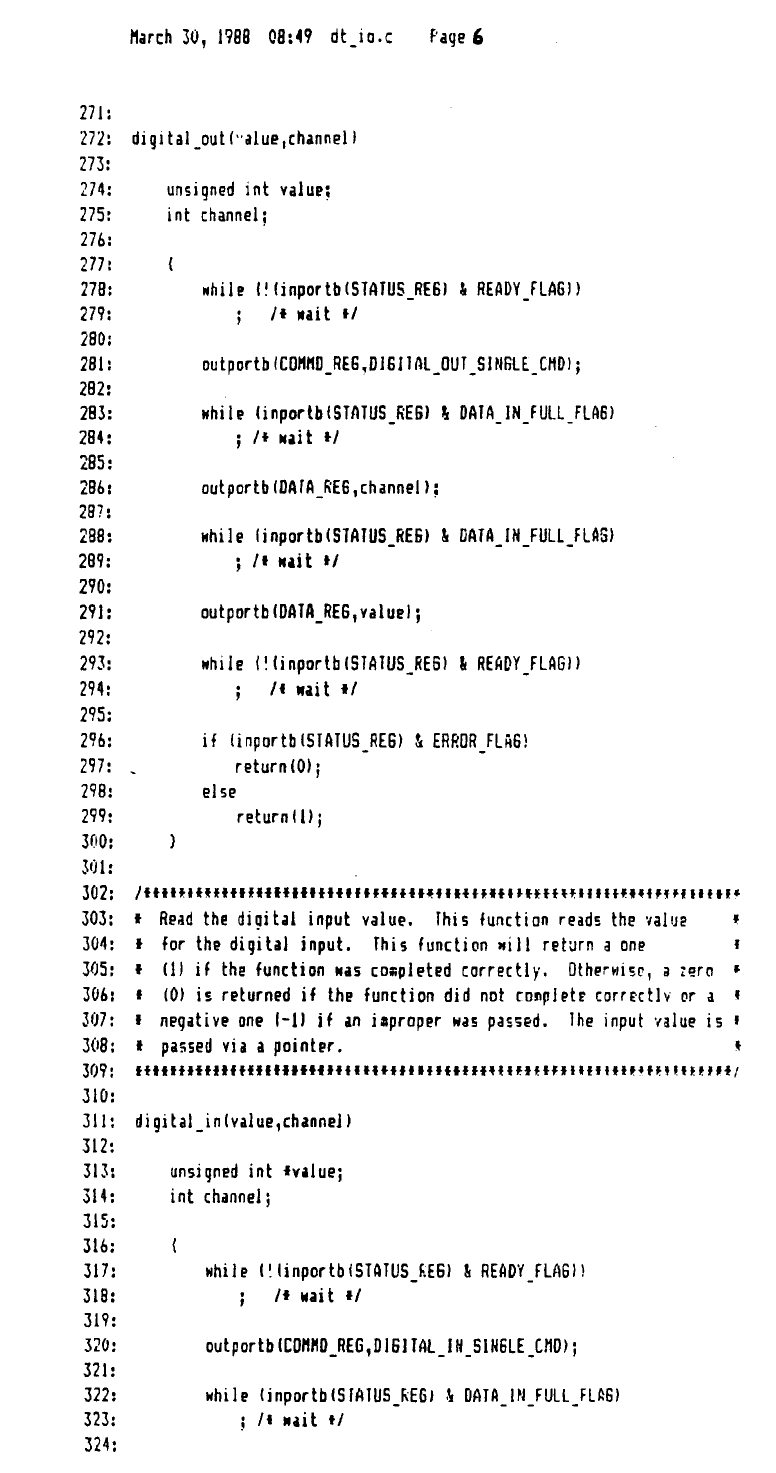

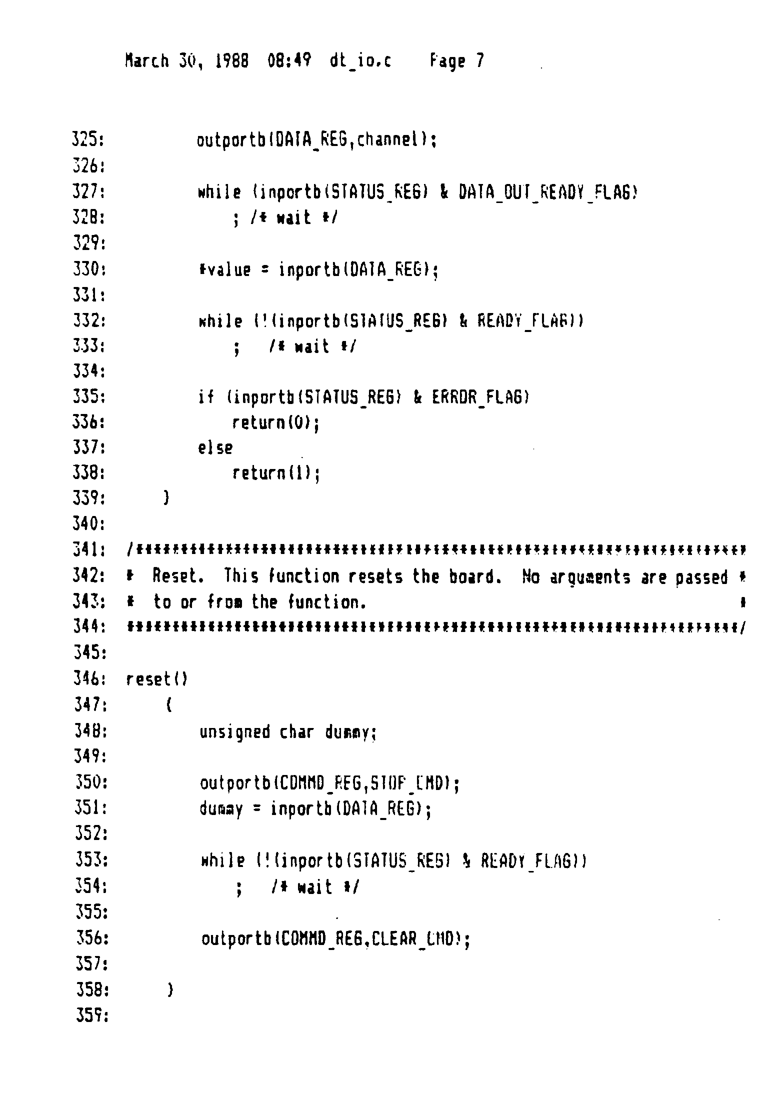

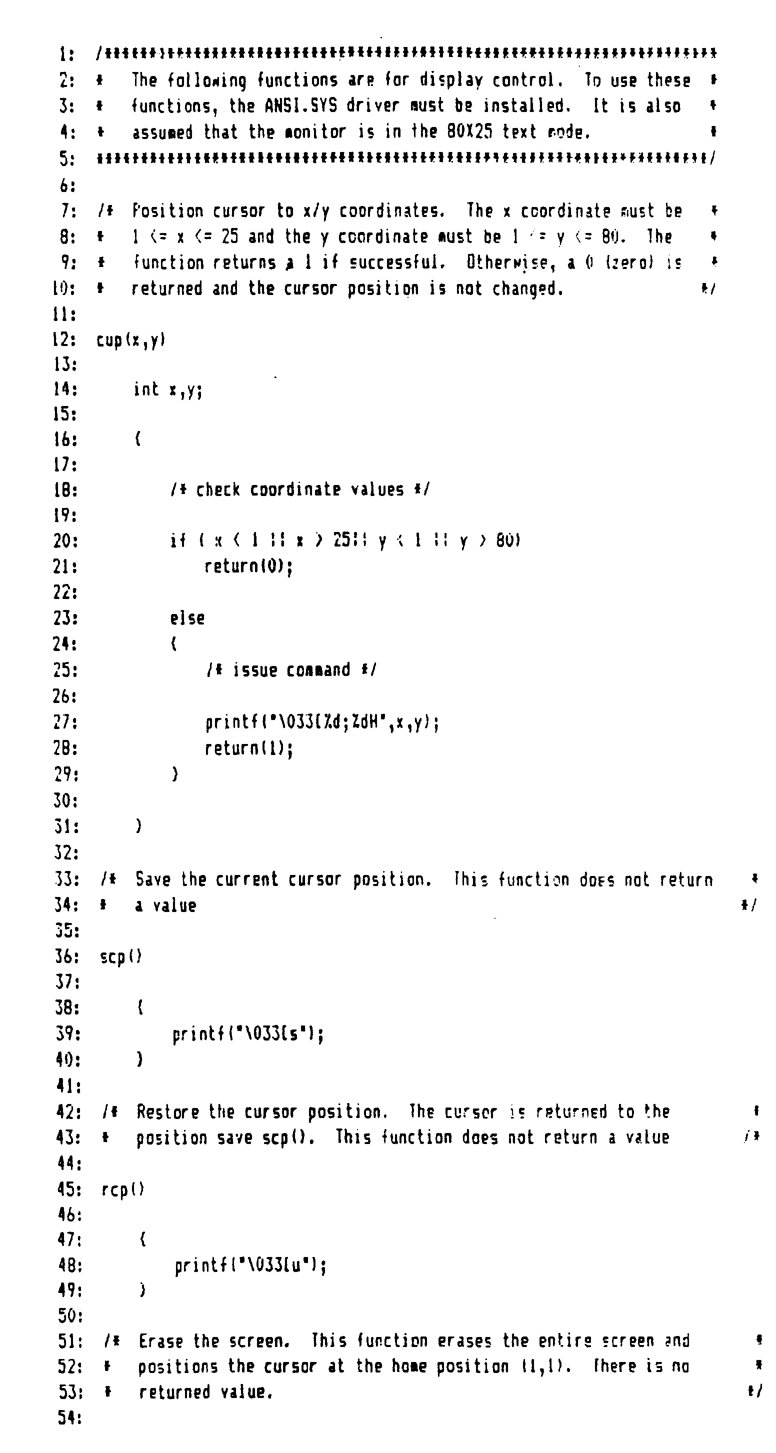

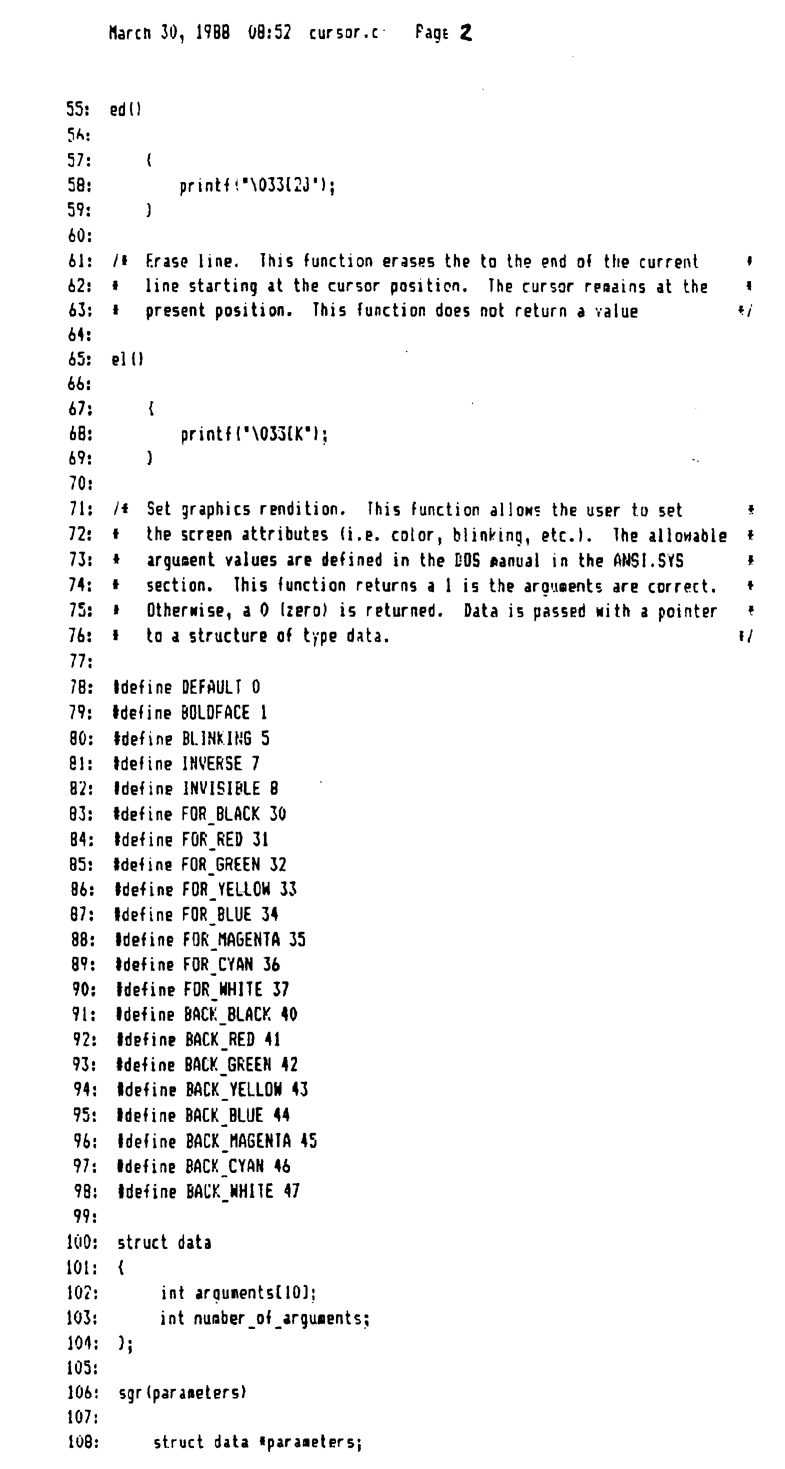

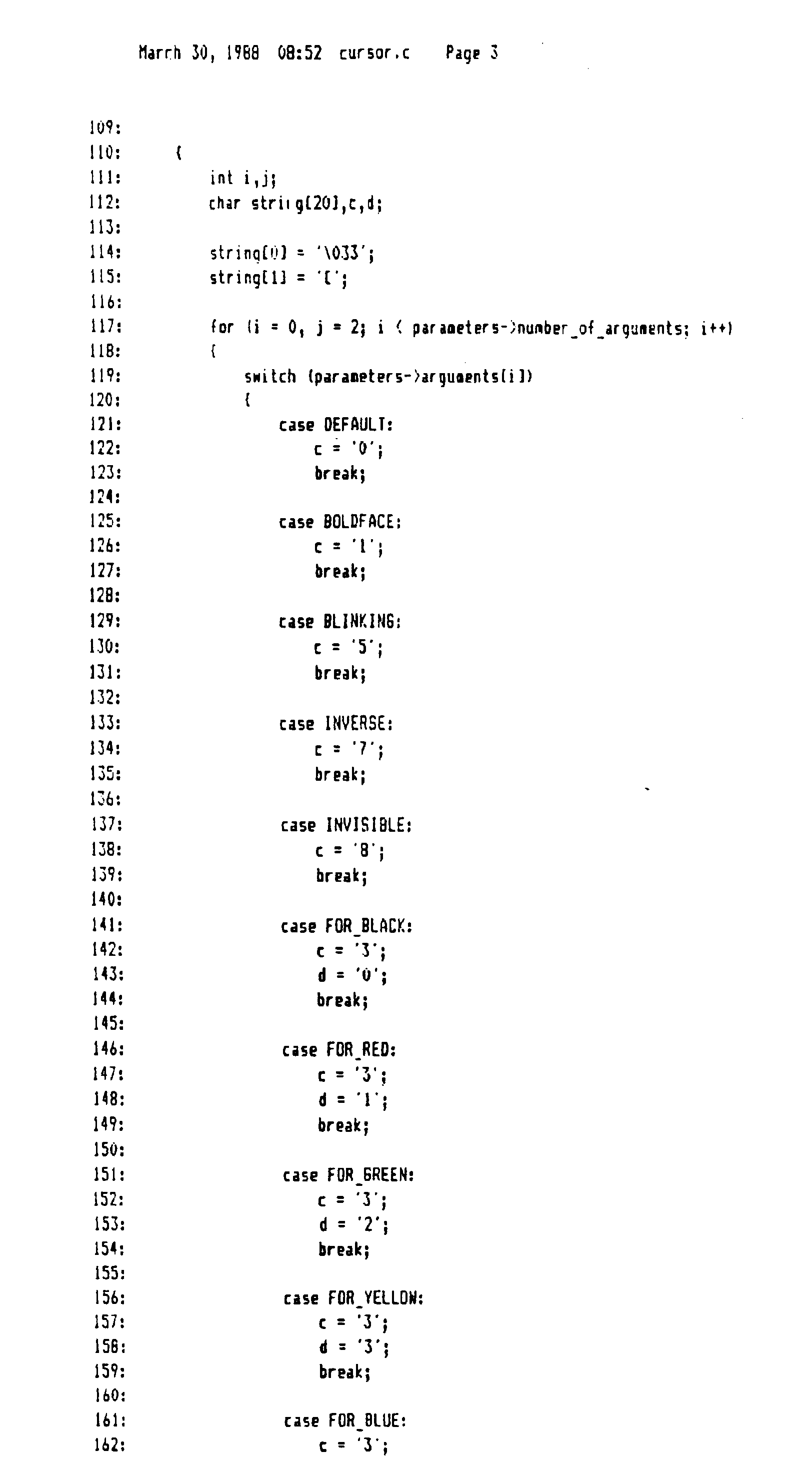

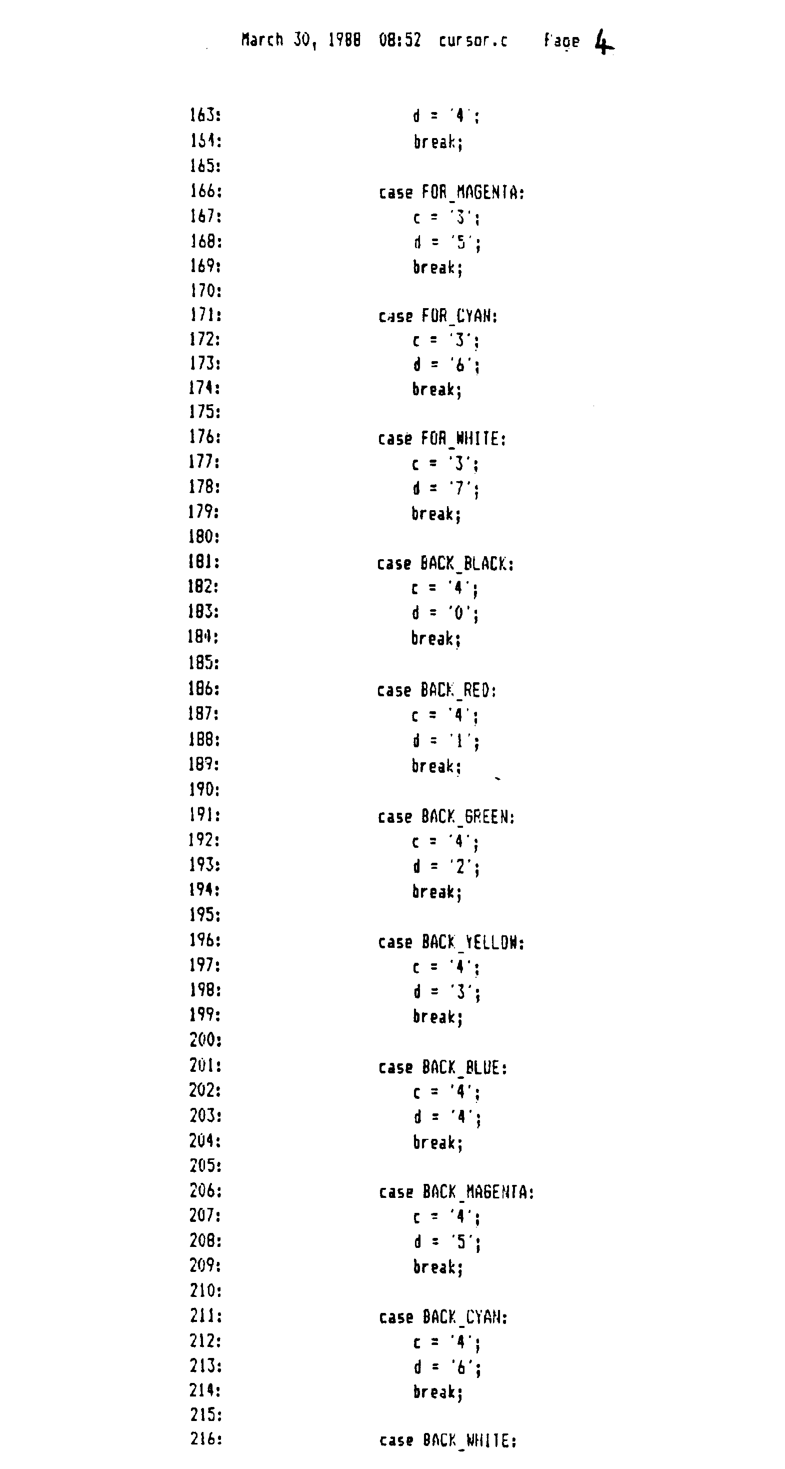

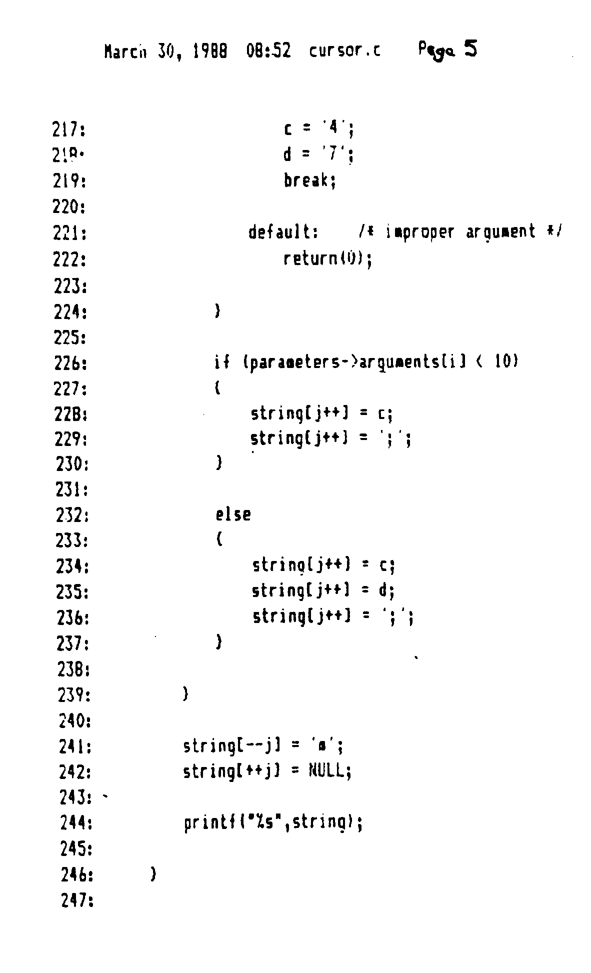

## Claims

1. Apparatus for automatically cooling a workpiece during manufacture by shape melting, the apparatus comprising:
cooling means (10) for peripherally cooling the workpiece (12);
pre-cooling and post-cooling temperature sensing means (14, 16) for peripherally sensing the temperature of the workpiece (12) and establishing control signals indicative of the sensed temperatures;
translating means for translating the cooling means (10) and the temperature sensing means (14, 16) about the workpiece; and
controlling means (18) for controlling the cooling means (10) in response to the control signals of the temperature sensing means (14, 16);
the cooling means (10) comprising:
at least one spray head (24) directed at the workpiece (12);
a coolant supply duct (26) connected to the or each spray head (24);
a gas supply duct (28) connected to the or each spray head (24); and
regulating means (30, 34) for regulating flow through the coolant and gas supply ducts (26, 28), the regulating means (30, 34) being responsive to the controlling means (18).

2. Apparatus according to claim 1, wherein each temperature sensing means (14, 16) comprises a sliding contact thermocouple.

3. Apparatus according to claim 1 or claim 2, comprising aspirating means (52, 54) for aspirating coolant vapour resulting from the spray head or heads (24).

4. Apparatus according to claim 3, wherein the aspirating means (52, 54) includes a housing for enshrouding the spray head or heads (24) to facilitate removing the coolant vapour.

5. Apparatus according to claim 4, wherein the translating means includes an attachment (28) from said housing to a welding head (56) for depositing molten weld material.

6. Apparatus according to claim 5, wherein said housing is positioned appropriately 30° to 45° in a direction of rotation from the welding head (56) in the case of building an axially symmetrical workpiece.

7. Apparatus according to any one of the preceding claims, wherein the controlling means (18) comprises a computer.

8. A method of automatically cooling a workpiece during manufacture by shape melting, the method comprising the steps of:
cooling the periphery of the workpiece (12);
sensing (14) the temperature of the periphery of the workpiece (12) prior to the cooling step;
sensing (16) the temperature of the periphery of the workpiece (12) after the cooling step;
establishing control signals indicative of the sensed temperatures; and
controlling the rate of cooling with a controlling means (18) responsive to said control signals;
said cooling step comprising the steps of:
spraying a coolant on to the workpiece (12) via at least one spray head (24);
supplying coolant via a duct (26) to the or each spray head (24);
blowing a gas on to the workpiece (12) through the or each spray head (24);
supplying a gas via a duct (28) to the or each spray head (24); and
regulating the flow of the coolant and the gas with a regulating means (30, 34) responsive to the controlling means (18).

9. A method according to claim 8, comprising the step of translating cooling means (10) for effecting said cooling and temperature sensing means (14, 16) for effecting said temperature sensing about the workpiece (12).

10. A method according to claim 8 or claim 9, comprising the step of aspirating coolant vapour resulting from the spray head or heads (24).

## Patentansprüche

1. Vorrichtung zum automatischen Kühlen eines Werkstückes während der Herstellung durch Formschmelzen, wobei die Vorrichtung aufweist:
eine Kühleinrichtung (10), um das Werkstück (12) an seinem Umfang zu kühlen,
Temperaturerfassungseinrichtungen (14, 16) vor der Kühlung und nach der Kühlung, um am Umfang die Temperatur des Werkstückes (12) zu erfassen und um Steuersignale bereitzustellen, die kennzeichnend für die erfaßten Temperturen sind,
eine Überführungseinrichtung, um die Kühleinrichtung (10) und die Temperaturerfassungseinrichtungen (14, 16) an bzw. in die Umgebung des Werkstückes zu überführen, und
eine Steuereinrichtung (18), um die Kühleinrichtung (10) unter Ansprechen auf die Steuersignale der Temperaturerfassungseinrichtungen (14, 16) zu steuern,
wobei die Steuereinrichtung aufweist:
zumindest einen Sprühkopf (24), der auf das Werkstück (12) gerichtet ist,
eine Kühlmittelzufuhrleitung (12), die mit dem bzw. mit jedem Sprühkopf (24) verbunden ist,
eine Gaszufuhrleitung (28), die mit dem bzw. jedem Sprühkopf (24) verbunden ist und
eine Regulierungseinrichtung (30, 34), zum Regulieren des Stromes durch die Kühlmittel- und Gaszufuhrleitungen (26, 28), wobei die Reguliereinrichtung (30, 34) auf die Steuereinrichtung (18) anspricht.

2. Vorrichtung nach Anspruch 1, wobei jede Temperaturerfassungseinrichtung (14, 16) ein Gleitkontakt-Thermoelement aufweist.

3. Vorrichtung nach Anspruch 1 oder 2, welche eine Absaugeinrichtung (52, 54) zum Absaugen von Kühlmitteldampf aufweist, der von dem Sprühkopf oder den Köpfen (24) herrührt.

4. Vorrichtung nach Anspruch 3, wobei die Absaugeinrichtung (52, 54) ein Gehäuse zum Einhüllen des Sprühkopfes oder der-köpfe (24) aufweist, um das Entfernen des Kühlmitteldampfes zu erleichtern.

5. Vorrichtung nach Anspruch 4, wobei die Überführungseinrichtung eine Befestigung (28) von dem Gehäuse zu einem Schweißkopf (56) für das Abscheiden von geschmolzenem Schweißmaterial aufweist.

6. Vorrichtung nach Anspruch 5, wobei im Falle des Aufbaues eines axialsymmetrischen Werkstückes das Gehäuse, in Drehrichtung des Schweißkopfes (56) gesehen, unter näherungsweise 30 bis 45° angeordnet ist.

7. Vorrichtung nach einem der vorstehenden Ansprüche, wobei die Steuereinrichtung (18) einen Computer aufweist.

8. Verfahren zum automatischen Kühlen eines Werkstückes während der Herstellung durch Formschmelzen, wobei das Verfahren die Schritte aufweist:
Kühlen des Umfanges des Werkstückes (12),
Erfassen (14) der Temperatur des Umfanges des Werkstückes (12) vor dem Schritt des Kühlens,
Erfassen (16) der Temperatur am Umfang des Werkstückes (12) nach dem Schritt des Kühlens,
Bereitstellen von Steuersignalen, die kennzeichnend für die erfaßten Temperaturen sind, und
Steuern der Kühlrate mit einer Steuereinrichtung (18), die auf die Steuersignale anspricht,
wobei der Schritt des Kühlens wiederum die folgenden Schritte aufweist:
Sprühen eines Kühlmittels auf das Werkstück (12) über zumindest einen Sprühkopf (24),
Zuführen eines Kühlmittels über eine Leitung (26) auf den oder jeden Sprühkopf (24),
Blasen eines Gases auf das Werkstück (12) durch den oder jeden Sprühkopf (24),
Zuführen eines Gases über eine Leitung (28) zu dem oder jedem Sprühkopf (24) und
Regulieren des Stromes des Kühlmittels und des Gases mit einer Reguliereinrichtung (30, 34), die auf die Steuereinrichtung (18) anspricht.

9. Verfahren nach Anspruch 8, welches den Schritt aufweist, daß die Kühleinrichtung (10), um das Kühlen zu bewirken, und die Temperaturerfassungseinrichtungen (14, 16), um das Temperaturerfassen zu bewirken, an das Werkstück (12) bzw. um das Werkstück (12) verschoben bzw. bewegt wird.

10. Verfahren nach Anspruch 8 oder 9, welches den Schritt aufweist, daß der Kühlmitteldampf, der von dem Sprühkopf oder den Köpfen (24) herrührt, abgesaugt wird.

## Revendications

1. Dispositif pour refroidir automatiquement une pièce à usiner durant sa fabrication par fusion de forme, le dispositif comprenant :
des moyens de refroidissement (10) pour refroidir périphériquement la pièce à usiner (12);
des moyens de détection de la température avant et après le refroidissement (14,16) pour détecter périphériquement la température de la pièce à usiner (12) et établir des signaux de contrôle indicatifs des températures détectées.
des moyens de translation pour translater les moyens de refroidissement (10) et les moyens de détection de la température (14,16) par rapport à la pièce; et
des moyens de contrôle (18) pour contrôler les moyens de refroidissement (10) en réponse aux signaux de contrôle
des moyens de détection de la température (14,16);
les moyens de refroidissement (10) comprenant :
au moins une tête de giclage (24) dirigée vers la pièce à usiner (12);
un conduit pour fournir l'agent de refroidissement (26) connecté à la ou à chaque tête de giclage (24); un conduit pour fournir du gaz (28) connecté à la ou à chaque tête de giclage (24); et
des moyens de régulation (30,34) pour réguler le flux à travers les conduits d'amenée de gaz et d'agent de refroidissement (26,28), les moyens de régulation (30,34) répondant aux moyens de contrôle (18).

2. Dispositif selon la revendication 1, dans lequel chaque moyen de détection de la température (14,16) comprend un contact thermocouple coulissant.

3. Dispositif selon la revendication 1 ou la revendication 2, comprenant des moyens d'aspiration (52,54) pour aspirer les vapeurs de l'agent de refroidissement résultant de la tête ou des têtes de giclage (24).

4. Dispositif selon la revendication 3, dans lequel les moyens d'aspiration (52,54) incluent un logement pour ensevelir la ou les têtes de giclage (24) afin de faciliter l'évacuation des vapeurs de l'agent de refroidissement.

5. Dispositif selon la revendication 4, dans lequel les moyens de translation incluent une attache (28) dudit logement vers la tête de soudure (56) pour déposer le matériau de soudure fondu.

6. Dispositif selon la revendication 5, dans lequel ledit logement est positionné approximativement à 30 à 45° dans une direction de rotation de la tête de soudure (56) dans le cas où l'on fabrique une pièce à usiner axialement symétrique.

7. Dispositif selon l'une des revendications précédentes, dans lequel les moyens de contrôle (18) comprennent un ordinateur.

8. Procédé de refroidissement automatique d'une pièce à usiner durant sa fabrication par fusion de forme, le procédé comprenant les étapes de :
refroidir la périphérie de la pièce (12);
détecter (14) la température de la périphérie de la pièce à usiner (12) avant l'étape de refroidissement;
de détecter (16) la température de la périphérie de la pièce à usiner (12) après l'étape de refroidissement;
d'établir des signaux de contrôle indicatifs des températures détectées; et
de contrôler le taux de refroidissement à l'aide de moyens de contrôle (18) qui répondent auxdits signaux de contrôle;
ladite étape de refroidissement comprenant les étapes de :
gicler un agent de refroidissement sur la pièce à usiner (12) par l'intermédiaire d'au moins une tête de giclage (24);
d'amener l'agent de refroidissement grâce à un conduit (26) à la ou à chaque tête de giclage (24);
de souffler un gaz sur la pièce à usiner (12) à travers la ou chaque tête de giclage (24);
d'amener un gaz à travers un conduit (28) à la ou à chaque tête de giclage (24); et
de réguler le flux de l'agent de refroidissement et du gaz avec un moyen de régulation (30,34) qui répond aux moyens de contrôle (18).

9. Méthode selon la revendication 8, comprenant l'étape de translater les moyens de refroidissement (10) pour effectuer ledit refroidissement et les moyens de détection de la température (14,16) pour effectuer ladite détection de température à propos de la pièce à usiner (12).

10. Procédé selon la revendication 8 ou la revendication 9, comprenant l'étape d'aspirer les vapeurs de l'agent de refroidissement résultant de la ou des têtes de giclage (24).
